(19) Europäisches Patentamt
European Patent Office
Office européen des brevets

(11) EP 4 476 052 B1

(12) EUROPÄISCHE PATENTSCHRIFT

(45) Veröffentlichungstag und Bekanntmachung des Hinweises auf die Patenterteilung:
**14.01.2026 Patentblatt 2026/03**

(21) Anmeldenummer: **24708183.9**

(22) Anmeldetag: **27.02.2024**

(51) Internationale Patentklassifikation (IPC):
***B29C 64/282*** *(2017.01)* ***B29C 64/106*** *(2017.01)*
***B29C 64/135*** *(2017.01)* ***B29C 64/268*** *(2017.01)*
***B33Y 10/00*** *(2015.01)* ***B33Y 30/00*** *(2015.01)*
***B33Y 80/00*** *(2015.01)* ***B29D 11/00*** *(2006.01)*

(52) Gemeinsame Patentklassifikation (CPC):
**B29C 64/106; B29C 64/135; B29C 64/268; B29C 64/282; B29D 11/00009; B29D 11/00432; B33Y 10/00; B33Y 30/00; B33Y 80/00**

(86) Internationale Anmeldenummer:
**PCT/EP2024/054991**

(87) Internationale Veröffentlichungsnummer:
**WO 2024/180086 (06.09.2024 Gazette 2024/36)**

(54) **VERFAHREN ZUM HERSTELLEN EINES OPTISCHEN ELEMENTS MITTELS BEARBEITENS EINES OPTISCH REAKTIVEN MATERIALS UND OPTISCHES ELEMENT**

METHOD FOR PRODUCING AN OPTICAL ELEMENT BY PROCESSING AN OPTICALLY ACTIVE MATERIAL, AND OPTICAL ELEMENT

PROCÉDÉ DE FABRICATION D’UN ÉLÉMENT OPTIQUE PAR TRAITEMENT D’UN MATÉRIAU OPTIQUEMENT ACTIF ET ÉLÉMENT OPTIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **28.02.2023 DE 102023104907**

(43) Veröffentlichungstag der Anmeldung:
**18.12.2024 Patentblatt 2024/51**

(73) Patentinhaber: **Xolo GmbH**
**12489 Berlin (DE)**

(72) Erfinder:
- **RADZINSKI, Dirk**
  **12489 Berlin (DE)**
- **GARMSHAUSEN, Yves**
  **12489 Berlin (DE)**
- **HERDER, Martin**
  **12489 Berlin (DE)**
- **KÖNIG, Niklas**
  **12489 Berlin (DE)**
- **REUTER, Marcus**
  **12489 Berlin (DE)**

(74) Vertreter: **Hafner & Kohl PartmbB**
**Schleiermacherstraße 25**
**90491 Nürnberg (DE)**

(56) Entgegenhaltungen:
**WO-A1-2021/089090 US-A1- 2022 118 705**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die Erfindung betrifft ein Verfahren zum Herstellen eines optischen Elements mittels Bearbeitens eines optisch reaktiven Materials.

### Hintergrund

Subtraktive Verfahren zur Herstellung optischer Elemente, beispielsweise das Fräsen, Schleifen, und Polieren von Werkstoffen, sind zeit- und kostenaufwendig. Andere formgebende Verfahren, wie das Präzisionsblankpressen von Glas oder Spritzguss von Polymermaterialien gehen mit erhöhten Fertigungstoleranzen sowie hohen initialen Kosten für die Formherstellung einher. Additive Fertigungsverfahren bieten dagegen den Vorteil der material-, zeit- und kostensparenden Herstellung beliebiger dreidimensionaler Körper.

Optische Elemente können mittels verschiedener Verfahren additiv gefertigt werden, beispielsweise Stereolithographie oder Digital Light Processing. Bei beiden Verfahren kann prozessbedingt allerdings immer nur schichtweise aufgebaut werden. Weiterhin lassen sich nur niedrigviskose Materialen verwenden, da diese gut fließen müssen. Bei Schichtdicken zwischen 10 $\mu$m und 100 $\mu$m geht dies für gekrümmte Oberflächen immer mit einem Verlust der Geometriegenauigkeit einher. Zudem kommt es durch den schichtweisen Aufbau zu Dichteinhomogenitäten und somit zur Inhomogenität der optischen und mechanischen Eigenschaften innerhalb des Bauteils. Der schichtweise Aufbau dieser Verfahren geht zudem immer mit langen Wartezeiten in den einzelnen Prozessschritten einher und führt damit zu langen Prozesszeiten. Als letztes müssen bei den genannten Verfahren überhängende Strukturelemente mit Stützstrukturen versehen werden. Der Aufbau dieser Stützstrukturen ist nicht nur zeit-, material- und somit auch kostenintensiv. Die Kontaktstellen dieser Stützstrukturen zum Bauteil vermindern zudem noch weiter die Oberflächenqualität der so hergestellten Bauteile. Zwar lässt sich die Oberflächengüte durch Nachbearbeitungsschritte, wie Polieren oder Beschichtungen, weiter verbessern, jedoch geht dies auch mit einem Verlust der Geometriegenauigkeit einher und ist als weiterer Prozessschritt sowohl zeitals auch kostenintensiv.

Bei Continuous Liquid Interphase Production (CLIP, Nature Materials, 5, 365-369 (2006)) wird der Bauraum von unten durch eine sauerstoffdurchlässige Membran bestrahlt, wodurch sich eine chemische Inhibierungszone bildet, was einen kontinuierlichen Aufbau isotroper Objekte ermöglicht. Dieses Verfahren ist zwar wesentlich schneller als die herkömmliche Stereolithographie aber immer noch vom Fließverhalten der Photoharze abhängig, wodurch keine hochviskosen Materialien verwendet werden können, die sich gut zur Herstellung von Polymeren mit hoher mechanischer Festigkeit eignen. Außerdem kann bei diesem Verfahren nicht auf Stützstrukturen verzichtet werden, die die oben genannten Nachteile mit sich bringen. Weiterhin gibt es chemische Beschränkungen hinsichtlich des Harzes, da die Sauerstoffinhibierung nicht bei kationischer Polymerisation oder Thiol-En-Harzen funktioniert. Schließlich können einige Additive wie Basen nicht verwendet werden, da diese der Sauerstoffinhibierung entgegenwirken.

Dokument WO2014 / 108 364 A1 offenbart ein Multijettingverfahren, bei dem eine Schicht kleiner flüssiger Photoharztropfen ortsgenau auf einer Oberfläche abgelegt wird und anschließend durch UV-Bestrahlung ausgehärtet werden. Durch geschickte Kontrolle der Benetzungseigenschaften kann die natürliche Krümmung der einzelnen Tropfenoberflächen genutzt werden, um sehr hohe Oberflächengüten zu realisieren, obwohl auch hier schichtweise aufgebaut wird. Prozessbedingt werden hierbei jedoch auch niedrig-viskose Materialien eingesetzt und bei diesen Verfahren kann immer nur eine optische Oberfläche frei geformt werden, die zudem Restriktionen bzgl. der druckbaren Winkel und anderer Geometrieeinschränkungen unterworfen ist.

Im Dokument DE 10 2020 108 375 B3 ist ein Verfahren zum Herstellen einer Intraokularlinse mit folgenden Schritten offenbart: Bereitstellen eines für elektromagnetische Strahlung transparenten Behälters, in dem eine Flüssigkeit angeordnet ist, die mit der elektromagnetischen Strahlung aushärtbar ist; Bestrahlen der Flüssigkeit mit einem Satz an Bildern, die von der elektromagnetischen Strahlung gebildet werden und die jeweils eine Intraokularlinse zeigen, wobei jedes der Bilder des Satzes unter einem anderen Einstrahlwinkel bezüglich einer durch die Flüssigkeit verlaufenden Bezugsebene in die Flüssigkeit eingestrahlt wird, wodurch die Flüssigkeit ausgehärtet wird und die ausgehärtete Flüssigkeit die Intraokularlinse bildet. Das Verfahren ist insofern limitiert, als dass sich keine stark anisotropen Strukturen oder scharfen Kanten ausbilden lassen, wodurch die Strukturfreiheit eingeschränkt ist.

Für die Herstellung von optischen Elementen können Ausgangsmaterialien mittels Einstrahlens von Licht einer oder mehrerer Wellenlängen auf das Ausgangsmaterial optisch bearbeitet werden, um wenigstens eine Materialeigenschaft des Ausgangsmaterials hierdurch zu verändern. So ist es beispielsweise als solches bekannt, mit Hilfe einer solchen optischen Bearbeitung ein Ausgangsmaterial auszuhärten.

In dem Dokument US 4,041,476 sind ein Verfahren und eine Vorrichtung beschrieben, mit denen ein dreidimensionaler Körper aus einem Ausgangsmaterial hergestellt werden kann, indem Lichtstrahlen unterschiedlicher Wellenlänge auf das Ausgangsmaterial eingestrahlt werden und sich hierbei punktförmig überlappen.

Die Polymerisation ist eine Reaktion, die zum Herstellen von Kunststoffen genutzt wird. Bei der Photopolymerisation, die eine Form der optischen Bearbeitung eines Ausgangsmaterials ist, wird die Reaktion mittels Einstrahlen von Licht auf das polymerisierbare Ausgangsmaterial ausgelöst. Solche polymerisierbaren

Ausgangsstoffe oder -materialien werden auch als Fotopolymer bezeichnet. Hierbei handelt es sich um ein Polymer, das seine Materialeigenschaften ändert, wenn **es mit Licht** bestrahlt wird. Die Lichteinstrahlung bewirkt strukturelle Änderungen, beispielsweise die fotochemische Härtung des Materials durch Vernetzung. Die Fotopolymerisation wird beispielsweise beim 3D-Drucken genutzt, um mittels Lichteinstrahlung in dem polymerisierbaren Ausgangsmaterial dreidimensionale Formkörper aus dem ausgehärteten Material herzustellen.

Das Ausgangsmaterial selbst kann für das eingestrahlte Licht transparent und somit unempfindlich sein. Es werden Fotoinitiator-Moleküle beigemischt, welche das Licht absorbieren und die Aushärtung des Ausgangsmaterials initiieren. Für die Prozessierung des Ausgangsmaterials im unveränderten (freien) Volumen ist die Adressierung eines freigewählten Punktes im 3-dimensionalen Raum notwendig. Eine Möglichkeit ist die Verwendung von speziellen Fotoinitiatoren, die auch als Dual-Color-Fotoinitiatoren bezeichnet werden (WO 2020 / 245 456 A1 und WO 2021/ 089 090 A1). Diese werden bevorzugt oder ausschließlich durch Absorption von Photonen zweier unterschiedlicher Wellenlängen oder zweier unterschiedlicher, nicht-überlappender Wellenlängenbereiche angeregt. Dual-Color-Fotoinitiatoren können auf unterschiedlichen Wegen erzeugt werden. In einer Variante weisen Moleküle ohne Lichteinstrahlung einen Grund- / Normalzustand (A) auf. In diesem Zustand besitzt das Molekül eine Absorptionsbande für eine Wellenlänge $\lambda_1$ und eine möglichst geringe Absorption bei einer anderen Wellenlänge $\lambda_2$.

Die Moleküle können sodann einen voraktivierten oder angeregten Zwischenzustand (B) einnehmen. Der voraktivierte oder angeregte Zwischenzustand wird erzeugt durch Absorption von Licht der Wellenlänge $\lambda_1$ aus dem Grundzustand A. Die Fotoinitiator-Moleküle weisen im Zwischenzustand B eine Absorptionsbande für die Wellenlänge $\lambda_2$ auf. Die Absorptionsbande für die Wellenlänge $\lambda_1$verschwindet. Alternativ bleibt die Absorptionsbande für die Wellenlänge $\lambda_1$ erhalten. Hierdurch entsteht ein unerwünschter, konkurrierender Übergangskanal zum Zustand C. Das Fotoinitiator-Molekül kehrt in Abwesenheit von Licht in den Zustand A zurück. Alternativ kehrt das Fotoinitiator-Molekül nach Anregung mit Licht einer dritten Wellenlänge $\lambda_3$ in den Zustand A zurück. Dies erlaubt eine gezielte Inhibierung des Initiators im Zustand B.

Der aktive Zustand C der Moleküle wird durch Absorption der Wellenlänge $\lambda_2$ aus B erzeugt. Der Zustand C setzt eine chemische und / oder eine physikalische Modifikation der unmittelbaren Umgebung des Moleküls in Gang. Eine Rückreaktion zu B ist nicht vorgesehen, aber möglich.

## Zusammenfassung

Aufgabe der Erfindung ist es, ein Verfahren zum Herstellen eines optischen Elements mittels Bearbeitens eines optisch reaktiven Materials anzugeben, mit welchem auf effiziente Art und Weise ein Ausgangsmaterial mehrdimensional optisch bearbeitet werden kann.

Zur Lösung ist ein Verfahren zum Herstellen eines optischen Elements mittels Bearbeitens eines optisch reaktiven Materials nach dem Anspruch 1 geschaffen. Ausgestaltungen sind Gegenstand von abhängigen Unteransprüchen.

Nach einem Aspekt ist ein Verfahren zum Herstellen eines optischen Elements mittels Bearbeitens eines optisch reaktiven Materials geschaffen, welches Folgendes aufweist: Bereitstellen eines Ausgangsmaterial, welches optisch reaktiv ist und ein Arbeitsvolumen ausfüllt; optisches Bearbeiten des Ausgangsmaterials in dem Arbeitsvolumen mittels Einstrahlen von Licht einer ersten Wellenlänge und Licht einer zweiten Wellenlänge, die von der ersten Wellenlänge verschieden ist, wobei mittels des optischen Bearbeitens wenigstens eine Materialeigenschaft des Ausgangsmaterials verändert wird. Das optische Bearbeiten umfasst Folgendes: Bestrahlen eines ersten Schichtteilvolumens des mit dem Ausgangsmaterial ausgefüllten Arbeitsvolumens mit dem Licht erster Wellenlänge; Bestrahlen des ersten Schichtteilvolumens des Arbeitsvolumens mit dem Licht zweiter Wellenlänge, wobei das Licht zweiter Wellenlänge hierbei in das Arbeitsvolumen projiziert wird; Bestrahlen eines zweiten Schichtteilvolumens des mit dem Ausgangsmaterial ausgefüllten Arbeitsvolumens, welches von dem ersten Schichtteilvolumen verschieden ist, mit dem Licht erster Wellenlänge; Bestrahlen des zweiten Schichtteilvolumens des Arbeitsvolumens mit dem Licht zweiter Wellenlänge, wobei das Licht zweiter Wellenlänge hierbei in das Arbeitsvolumen projiziert wird; und Wiederholen der vorangehenden Schritte zur schichtweisen optischen Bearbeitung des Ausgangsmaterials in dem Arbeitsvolumen bis ein zu bearbeitendes Volumen des Ausgangsmaterials, welches das Arbeitsvolumen ganz oder teilweise erfasst, optisch bearbeitet ist, und hierbei aus dem Ausgangsmaterial ein Grünling gebildet ist; und Weiterverarbeiten des Grünlings, sodass aus dem Grünling ein optisches Element zumindest teilweise, insbesondere vollständig, gebildet ist.

Mit Hilfe des Verfahrens ist es ermöglicht, ein optisches Element in effizienter Weise herzustellen. Hierbei kann das Ausgangsmaterial, welches bereits vor dem Einstrahlen des Lichts erster und zweiter Wellenlänge in dem Arbeitsvolumen und dieses ausfüllend eingebracht wird, im Arbeitsvolumen mehrdimensional oder räumlich optisch bearbeiten werden, derart, dass mittels des Einstrahlens des Lichts erster und zweiter Wellenlänge, wahlweise von Licht einer oder mehrerer weiterer Wellenlängen, wenigstens eine Materialeigenschaft des Ausgangsmaterials verändert wird und mittels Weiterverarbeitens (Nachbearbeitens) ein optisches Element erhalten wird. Mittels des Verfahrens kann ein volumetrisches 3D Druckverfahren bereitgestellt sein, welches insbesondere kontinuierlich ablaufen kann und somit die Herstellung isotroper Objekte ermöglichen

kann.

Die Erfindung geht dabei von der überraschenden Erkenntnis aus, dass sich volumetrische 3D Druckverfahren, welche ein Bestrahlen entsprechender Schichtteilvolumina mit Licht einer ersten und einer zweiten Wellenlänge beinhalten, hervorragend für die Herstellung optischer Elemente eignen. Insbesondere lassen sich mit entsprechenden volumetrischen 3D Druckverfahren, welche ein Bestrahlen entsprechender Schichtteilvolumina mit Licht einer ersten und einer zweiten Wellenlänge beinhalten, optische Elemente mit hervorragenden Eigenschaften mit hoher Qualität in effizienter Weise herstellen. Die Erfindung bricht damit mit der bis dato gängigen Auffassung, dass sich mit volumetrischen 3D Druckverfahren keine optischen Elemente, insbesondere keine größeren optischen Elemente, mit gewünschten Eigenschaften herstellen lassen; insbesondere konnte anhand von Untersuchungen gezeigt werden, dass sich z. B. das CT-basierte axiale Lithografie (Computed axial lithography), kurz CAL-Verfahren, nicht eignet, insbesondere deshalb, weil dieses Verfahren nur bedingt zur Herstellung von Mikrooptiken geeignet ist oder zu mit Artefakten behafteten Bauteiloberflächen führt, die eine Verwendung des gedruckten Bauteils als optisches Element ausschließen. Mit anderen Worten konnten die Erfinder feststellen, dass es überraschender Weise doch möglich ist, bestimmte volumetrische 3D Druckverfahren, nämlich insbesondere volumetrische 3D Druckverfahren, welche ein Bestrahlen entsprechender Schichtteilvolumina mit zwei unterschiedlichen Wellenlängen beinhalten, für die Herstellung optischer Elemente einzusetzen, insbesondere optische Elemente aus Polymermaterialien oder Kunststoffen.

## Beschreibung von Ausführungsbeispielen

Im Folgenden werden weitere Ausführungsbeispiele unter Bezugnahme auf Figuren einer Zeichnung näher erläutert. Hierbei zeigen:

Fig. 1 eine schematische Darstellung einer Vorrichtung zum Bearbeiten eines optisch reaktiven Materials von oben;

Fig. 2 eine schematische Darstellung der Vorrichtung aus Fig. 1 von der Seite;

Fig. 3a bis 3c eine schematische Darstellungen einer Anordnung zum optischen Bearbeiten eines Ausgangsmaterials in einem Aufnahmegefäß;

Fig. 4 eine schematische Darstellung einer weiteren Anordnung zum optischen Bearbeiten eines Ausgangsmaterials in einem Aufnahmegefäß;

Fig. 5 eine schematische Darstellung einer anderen Anordnung zum optischen Bearbeiten eines Ausgangsmaterials in einem Aufnahmegefäß mittels eines Projektionsgeräts;

Fig. 6 eine schematische Darstellung einer weiteren Anordnung zum optischen Bearbeiten eines Ausgangsmaterials in einem Aufnahmegefäß;

Fig. 7 eine schematische Teildarstellung der Anordnung aus Fig. 6;

Fig. 8a eine schematische Darstellung einer weiteren Anordnung zum optischen Bearbeiten eines Ausgangsmaterials mittels eines Spiegelrings in einer Draufsicht und

Fig. 8b eine schematische Darstellung der weiteren Anordnung in einer Seitenansicht.

Fig. 1 und 2 zeigen eine schematische Darstellung einer Anordnung für eine Vorrichtung zum optischen Bearbeiten eines optisch reaktiven Materials von oben und von der Seite. In einem Aufnahmegefäß 1 ist ein Arbeitsvolumen 2 bereitgestellt, welches wenigstens teilweise von einem Ausgangsmaterial 3 ausgefüllt ist. Das Ausgangsmaterial 3 kann ein oder mehrere Stoffe umfassen, die fest, flüssig oder pastös sein können. Zum Bearbeiten wird das Ausgangsmaterial 3 mit Licht einer ersten Wellenlänge und Licht einer zweiten Wellenlänge bestrahlt, die in dem Arbeitsvolumen 2 zum Auslösen einer optisch aktivierten Reaktion in einem Schichtteilvolumen 4 überlappend eingestrahlt werden.

Das Licht erster Wellenlänge wird mit Hilfe einer ersten Lichtquelle 5 bereitgestellt, die bei der gezeigten Ausführungsform beispielhaft als ein Lichtschnittgenerator ausgeführt ist. Beim Bearbeiten des Ausgangsmaterials 3 wird ein Einstrahlbereich 6 für das Licht erster Wellenlänge (Lichtschnitt), welcher bei der gezeigten Ausführungsform tailliert ist, Stück für Stück über das Arbeitsvolumen 2 bewegt, so dass eine schichtweise Bearbeitung des Ausgangsmaterials 3 stattfindet. Es werden also Schichtteilvolumen des zuvor mit dem Ausgangsmaterial 3 befüllten Arbeitsvolumens 2 (schichtförmige Teilvolumen des Arbeitsvolumens 2) nacheinander bestrahlt, insbesondere einander nicht überlappende Schichtteilvolumen.

In Abhängigkeit von der aktuellen Position des Einstrahlbereichs 6 (Lichtschnitt) wird das Licht zweiter Wellenlänge mit Hilfe eines Projektors 7 in das aktuell mit dem Licht erster Wellenlänge bestrahlte Schichtteilvolumen projiziert (Projektor- oder Projektionsbild). Dieses bedeutet, dass die Projektionsebene oder das Projektionsvolumen des Projektors 7 in dem Schichtteilvolumen liegen, welches gerade mit dem Licht erster Wellenlänge bestrahlt wird. Das Licht erster Wellenlänge (Lichtschnitt) und das Licht zweiter Wellenlänge (Lichtprojektion) überlappen so räumlich oder in einer Projektionsebene des Projektors 7 flächig in einem makroskopischen Schichtteilvolumen des Ausgangsmaterials 3, welches als Teilvolumen des Arbeitsvolumens 2 gerade mittels des Lichtschnitts bestrahlt wird.

Auf diese Weise wird in dem aktuell bestrahlten schichtförmigen Teilvolumen wenigstens eine Materialeigenschaft des Ausgangsmaterials 3 verändert, beispielsweise dahingehend, dass das ursprüngliche Ausgangsmaterial aushärtet. Hierbei kann aufgrund des Zusammentreffens des Lichts der beiden Wellenlängen eine Polymerisation im Ausgangsmaterial 3 ausgelöst

werden. Auf diese Weise ist es beispielsweise ermöglicht, einen dreidimensional geformten Körper Schicht für Schicht in dem Arbeitsvolumen 2 herzustellen. Die dreidimensionale Formung des Körpers wird hierbei mit Hilfe der in das jeweilige Schichtvolumen abgebildeten Projektion des Projektors 7 beeinflusst und bestimmt.

Das Verfahren erlaubt eine Anpassung an unterschiedliche Volumina des Ausgangsmaterials 3. Ferner erlaubt es eine Optimierung zwischen Auflösung und Geschwindigkeit der Prozessierung.

Ein nicht limitierendes Beispiel für die Herstellung eines optischen Elements ist im Folgenden gegeben: Urethandimethacrylat (Genomer 4247, 350 g), Ditrimethylolpropanetetraacrylat (Miramer M410, 49 g), Hexandioldiacrylat (Miramer M200, 4 g), N-Methyldiethanolamin (4 g) und Dual-Color-Fotoinitiator 1 (50 mg) werden homogen gemischt. Die optische Transmission des so entstandenen Harzes wurde mittels eines Cary 50 UVVis Spektrophotometers (Varian Inc.) bei einer optischen Pfadlänge von 10 mm zu 69 % bei $\lambda 1$ = 375 nm sowie zu >99 % bei $\lambda 2$ = 450-800 nm bestimmt. Das so entstandene Harz wird in eine Küvette überführt, welche nach den beschriebenen Verfahren optisch bearbeitet wird. Das ausgehärtete Objekt wird aus dem überschüssigen Ausgangsmaterial entnommen und mehrfach mit Isopropanol oder anderen Alkoholen gewaschen. Das Objekt kann nachgehärtet werden, indem es in einer Lösung aus Isopropylthioxanthon (ITX) in Ethanol platziert wird. Das Objekt wird der Lösung entnommen, an Luft getrocknet und mittels UV-Bestrahlung (365 nm) gehärtet. Das optische Element zeigt bei einer Dicke von 1 mm eine optische Transmission >90% bei 450 - 1600 nm und weist eine Oberflächenrauigkeit <0,04 µm ($R_a$ gemessen gemäß ISO 4288:199) auf.

Der Dual-Color-Fotoinitiator 1 hat folgende Struktur:

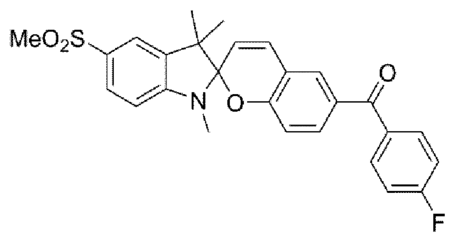

Ein weiteres nicht limitierendes Beispiel für die Herstellung eines optischen Elements ist im Folgenden gegeben: Urethandimethacrylat (Genomer 4247, 120 g), Tricyclo[5.2.1.02,6]decandime-thanoldiacrylat (Sartomer SR833S, 22,5 g), N-Methyldiethanolamin (7,5 g), RHEOBYK-7420CA (BYK-Chemie GmbH, 5,2 g), 2,6-Ditert-butyl-4-Methylphenol (BHT, 0,15 g), Campherchinon (0,15 g) und Dual-Color-Fotoinitiator 2 (60 mg), werden homogen gemischt. Die optische Transmission des so entstandenen Harzes wurde mittels eines Cary 50 UVVis Spektrophotometers (Varian Inc.) bei einer optischen Pfadlänge von 10 mm zu 69 % bei $\lambda 1$ = 375 nm sowie zu >99 % bei $\lambda 2$ = 450-800 nm bestimmt. Das so entstandene Harz weist nicht-Newtonsche Fließeigenschaften auf. Die Fließgrenze des so entstandenen Harzes wurde nach 24 h Ruhezeit mittels Rotationsrheometrie (Netzsch Kinexus Prime lab+ Rotationsrheometer, 20 mm Platte-Platte Geometrie, Schubspannungsrampe: $d\sigma/dt$ = 0.05 Pa/min, 25°C) zu $\sigma$ = 0,8 Pa bestimmt. Das so entstandene Harz wird in einen Behälter in Form einer Küvette überführt, welche nach den beschriebenen Verfahren optisch bearbeitet wird. Das ausgehärtete Objekt wird aus dem überschüssigen Ausgangsmaterial entnommen und mehrfach mit Tripropylenglykolmonomethylether und anschließend Isopropanol gewaschen. Das Objekt wird im Anschluss der jeweiligen Waschlösung entnommen, an Luft getrocknet und mittels Bestrahlung mit blauem Licht (450 nm) nachbearbeitet, insbesondere um es zu härten. Das optische Element zeigt bei einer Dicke von 1 mm eine optische Transmission >90% bei 400 - 1600 nm und weist eine Oberflächenrauigkeit <0,04 µm ($R_a$ gemessen gemäß ISO 4288:199) auf.

Der Dual-Color-Fotoinitiator 2 hat folgende Struktur:

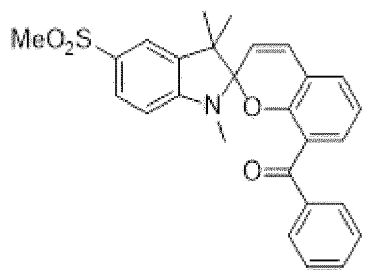

**Bei der Verwendung** von idealen Dual-Color-Fotoinitiatoren im Ausgangsmaterial 3 erfolgt die Anregung des aktiven Zustands C nur bei Absorption beider Wellenlängen $\lambda_1$ und $\lambda_2$ (erste und zweite Wellenlänge). Für nicht ideale Fotoinitiatoren kann ein Übergang vom Zwischenzustand B in den aktiven Zustand C auch durch Absorption der Wellenlänge $\lambda_1$ erfolgen. In Konsequenz werden Fotoinitiatoren nicht nur am Kreuzungspunkt beider Wellenlängen, sondern auch entlang des gesamten Lichtstrahls der Wellenlänge $\lambda_1$ in den Zustand C überführt. Da es vom aktiven Zustand C des Fotoinitiators keinen Rückweg in den Grundzustand A gibt, akkumuliert sich bei der Prozessierung mehrerer gewünschter Zielpunkte, eine erhebliche Menge Initiatoren im aktiven Zustand C in ungewünschten Gebieten. Die Vorrichtung erlaubt es, im Überlappungsbereich der Lichtstrahlen eine ausreichende Initiatorkonzentration im aktiven Zustand C für die Polymerisation des Ausgangsmaterials zu erzeugen, bei gleichzeitiger Minimierung der generierten Konzentration an Initiator-Molekülen im aktiven Zustand C entlang des Lichtstrahls erster Wellenlänge $\lambda_1$. Ferner ermöglicht es die Vorrichtung, die Akkumulierung von Fotoinitiatoren im aktiven Zustand C in ungewünschten Bereichen des Volumens

verursacht durch die Lichtüberlagerung für viele aufeinanderfolgende Zielpunkte zu minimieren.

Zeigt der Grundzustand A eine Absorptionsbande bei der zweiten Wellenlänge $\lambda_2$, kann der Fotoinitiator durch Licht der Wellenlänge $\lambda_2$ in den Zwischenzustand B und folgend in den aktiven Zustand C überführt werden. In Konsequenz werden Fotoinitiatoren nicht nur am Überlappungsbereich beider Wellenlängen, sondern auch entlang des gesamten Lichtstrahls der Wellenlänge $\lambda_2$ **in den** Zustand C überführt. Da es vom aktiven Zustand C des Fotoinitiators keinen Rückweg in den Grundzustand A gibt, akkumuliert sich bei der Prozessierung mehrerer gewünschter Zielpunkte, eine erhebliche Menge Initiatoren im aktiven Zustand C in ungewünschten Gebieten. Die Vorrichtung ermöglicht es, im Überlappungsbereich der Lichtstrahlen eine ausreichende Initiatorkonzentration im aktiven Zustand C für die gewünschte Modifikation des Ausgangsmaterials 3 zu erzeugen, bei gleichzeitiger Minimierung der generierten Konzentration von Initiator-Molekülen im aktiven Zustand C entlang des Lichtstrahls der Wellenlänge $\lambda_2$. Ferner soll die Vorrichtung ermöglichen, die Akkumulierung von Fotoinitiatoren im aktiven Zustand C in ungewünschten Bereichen des Volumens, verursacht durch die Lichtüberlagerung für viele aufeinanderfolgende Zielpunkte, zu minimieren.

Die Vorrichtung und das Verfahren können mit anderen Techniken kombiniert werden, welche die unerwünschte Aushärtung durch Akkumulation von Fotoinitiatoren im aktiven Zustand C begrenzen. In einem Beispiel kann die Sauerstoffkonzentration im Ausgangsmaterial eingestellt werden, um den Schwellwert, ab welchem es zum Aushärten des Materials kommt, zu variieren. In einem weiteren Beispiel kann ein Inhibitor zum Ausgangsmaterial zugefügt werden, um den Schwellwert, ab welchem es zum Aushärten des Materials kommt, zu variieren.

Nachfolgend werden weitere Aspekte der Vorrichtung zum optischen Bearbeiten des Ausgangsmaterials 3 erläutert.

Das Ausgangsmaterial 3 kann in einem transparenten Gefäß (Aufnahmegefäß 1) mit mindestens zwei optisch planen Eintrittsfenstern aufgenommen sein, welches das Ausgangsmaterial 3 mit den zugesetzten Dual-Color-Fotoinitiator-Molekülen oder anderen optisch aktiven Molekülen und gegebenenfalls weitere Additive wie Co-Initiatoren aufnimmt. Die als Lichtgenerator mit Abbildungsoptik ausgeführte Lichtquelle 5 erzeugt einen Lichtschnitt der Wellenlänge $\lambda_1$, welches durch ein Fenster des Aufnahmegefäßes 1 in das Arbeitsvolumen 2 eingestrahlt wird. Der Projektor 7 mit einer Leuchtquelle der Wellenlänge $\lambda_2$ erzeugt ein Bild, welches über ein Objektiv innerhalb des Lichtschnitts in dem Aufnahmegefäß 1 scharf abgebildet wird.

Durch die Brechung des eingestrahlten Lichts zweiter Wellenlänge an den Übergängen zwischen Luft und dem Aufnahmegefäß 1 und zwischen dem Aufnahmegefäß 1 und dem Ausgangsmaterial 3 kann sich eine Verschiebung der Fokusebene des projizierten Bildes (Licht zweiter Wellenlänge) im Vergleich zur optischen Abbildung ohne Aufnahmegefäß 1 ergeben. Bei großen Arbeitsvolumina des Aufnahmegefäßes 1 kann die Schärfetiefe des fokussierten Projektorbildes nicht ausreichend sein. In diesem Zusammenhang kann dann während der Bewegung des Lichtschnitts durch das Arbeitsvolumen 2 kontinuierlich eine Fokuskorrektur erfolgen.

Für Anwendungen im Bereich des 3D-Drucks kann der Brechungsindex des Ausgangsmaterials 3 ähnlich dem Material des Aufnahmegefäßes 1 sein. In diesem Fall führt nur der Übergang Luft mit Brechungsindex n, und Aufnahmegefäß 1 mit Brechungsindex $n_2$ zu einer Verschiebung der Fokusebene um den Betrag $\Delta s$ gegeben durch:

$$\Delta s = d \cdot \left(\frac{n_2}{n_1} - 1\right)$$

**Mit zunehmendem** Abstand d der Position des Lichtschnitts (Licht erster Wellenlänge) von einem Eintrittsfenster des Aufnahmegefäßes 1, wo das Projektorbild eintritt, nimmt die Fokusverschiebung gemäß der obigen Gleichung zu. Die Gleichung betrifft einen paraxialen, optischen Strahlengang beziehungsweise größere Abstände zwischen Projektor 7 und Aufnahmegefäß 1. Je nach Ausgestaltung, kann eine Kompensation der Verschiebung mittels einer motorisierten Fokusverstellung des fest montierten Projektors 7 oder mittels einer motorisierten Positionierung des gesamten Projektors 7 relativ zur Lichtschnittposition erfolgen. Im letztgenannten Beispiel ergibt sich eine gleichförmige, lineare Relativbewegung des Projektors 7 zum festen Lichtschnitt während der gleichförmigen Bewegung des Aufnahmegefäßes 1 durch den Lichtschnitt (Schichtteilvolumen) zur Prozessierung des gesamten Arbeitsvolumens 2.

Alternativ zu dem in Fig. 1 veranschaulichten Aufbau, kann das Projektorbild auch durch den Boden oder den Deckel des Aufnahmegefäßes 1 in das Arbeitsvolumen 2 eintreten, und der Lichtschnitt kann senkrecht hierzu durch eine oder mehrere der Seitenfenster eingekoppelt werden.

Alternativ kann der Lichtschnittgenerator 5 die Wellenlänge $\lambda_2$ erzeugen, und der Projektor 7 erzeugt die Wellenlänge $\lambda$

Sofern der Übergang vom Zwischenzustand B in den Ausgangszustand A mit Licht der Wellenlänge $\lambda_3$ erfolgen soll, erzeugt der Projektor 7 die Wellenlängen $\lambda_1$ und $\lambda_3$ oder die Wellenlängen $\lambda_2$ und $\lambda_3$, jeweils komplementär zur Wellenlänge des Lichtschnittgenerators.

Ein oder mehrere Lichtdetektoren 8a, 8b (Kamera oder einfacher Fotodetektor; vgl. Fig. 1 und 2) können benutzt werden, um die Vorgänge bei der Prozessierung zu untersuchen, indem das transmittierte Licht der Anregung des Lichtschnitts und gegebenenfalls des Projektors 7 gemessen wird. Hierbei können der

Lichtschnittgenerator 5 und gegebenenfalls auch der Projektor 7 weitere Lichtwellenlängen emittieren, die von den Anregungswellenlängen verschieden sind und nur der Beobachtung der Änderung der Materialeigenschaft des Ausgangsmaterials 3 dienen, zum Beispiel der Polymerisation.

Weiterhin kann eine Messung der emittierten Fluoreszenz von im Ausgangsmaterial 3 befindlichen, angeregten Fotoinitiatoren vorgesehen sein. Es können zum Beispiel die Intensität des gesamten transmittierten oder emittierten Lichts über einen Einzelphotodetektor gemessen und / oder die ortsaufgelöste Intensität über eine Kamera aufgezeichnet werden. Die Detektoren können über vorgesetzte Filter oder Spektrographen selektiv nur bestimmte Lichtwellenlängen des Projektors 7, des Lichtschnittgenerators 5 oder der Licht emittierenden, angeregten Fotoinitiatoren messen.

Die Auswertung der gesamten oder ortsaufgelösten Intensitäten kann eine Regelschleife steuern, welche die Intensität des Lichtschnittgenerators, die Intensität und Bildausgabe des Projektors, die Zeitsteuerung der Belichtungssequenz sowie die Verschiebung des Lichtschnitts innerhalb des Aufnahmegefäßes 1 beeinflusst. Hierfür ist eine Steuereinrichtung 9 vorgesehen, die gemäß Fig. 1 an die Lichtquelle 5 und den Projektor 7 koppelt.

Als Lichtquelle 5 kann eine Laserlichtquelle genutzt werden, zum Beispiel ein pulsbarer Single-Mode-Diodenlaser (Fabrikat: IBEAM SMART, Toptica Photonics AG, DE) mit einer Wellenlänge von 375nm und einer Ausgangsleistung im Dauerstrichbetrieb von max. 70mW, der Laserstrahldurchmesser beträgt 1.3mm (@ $1/e^2$). Eine asphärische POWELL Linse (Auffächerungswinkel $30^0$, N-BK7, Edmund Optics GmbH, DE) dient zur Umformung des Laserstrahls in eine divergierende Laserlinie. Eine direkt dahinter angeordnete plankonvexe Zylinderlinse mit langer Brennweite (f = 300.00 mm, N-BK7, Thorlabs GmbH, DE) und senkrechter Orientierung zur Auffächerungsebene generiert in einem Ausführungsbeispiel eine Strahltaille mit einem Durchmesser von etwa d=100$\mu$m an der Position des Gefäßes mit dem Ausgangsmaterial im Abstand von 30cm von dieser Linse. Eine plankonvexe Zylinderlinse (f = 150.00 mm, N-BK7, Thorlabs GmbH, DE) im Abstand der einfachen Brennweite zur POWELL Linse kollimiert die divergierende Laserlinie und sorgt für einen annährend parallelen Strahlenverlauf entlang der optischen Achse, die Höhe des Lichtschnitts nach der Kollimierung beträgt ca. 8.5cm. Vor dem Gefäß ist eine weitere Zylinderlinse der Brennweite (f = 100.00 mm, N-BK7) flexibel positioniert, welche den Strahlenverlauf in einen zulaufenden Lichtschnitt überführt, welche den Intensitätsabfall durch das Lambert-Beer'sche Absorptionsgesetz innerhalb des Gefäßes vermindert. Die nutzbare Höhe des Lichtschnitts im Bereich des Gefäßes durch die Fokussierung liegt bei etwa 2cm.

Für eine Umformung eines Laserstrahls in eine divergierende Laserlinie kann alternativ zur POWELL Linse auch ein geeignet angeordneter rotierender Polygonspiegel oder ein Galvoscanner verwendet werden. Prinzipiell ist es auch möglich, anstelle des Lasers eine Lichtquelle zu verwenden, die auf einer LED (Lichtemittierende Diode) oder einer thermischen Lichtquelle basiert.

Als Bildprojektor oder Projektor 7 kann ein DMD (Digital Micromirror Device der Firma Texas Instruments) basierender Projektor (Fabrikat: optoma UHD35) mit einer Auflösung von 3840 x 2160 Pixeln und 3600 Ansi Lumen verwendet werden. Die Projektionsoptik wurde ersetzt durch ein Projektionsobjektiv mit 90mm Brennweite (Braun Ultralit 2,4 / 90, Braun Photo Technik GmbH, Deutschland), welches ein scharfes Abbild innerhalb des Gefäßes generiert. Zur Wellenlängenselektion dient ein vorgesetztes Filterglas (GG475, Schott AG, Deutschland). Die Ansteuerung des Projektors 7 erfolgt über ein HDMI-Interface.

Als Aufnahmegefäß 1 kann zum Beispiel eine Großküvette aus optischem Glas (Innenmaße: 30mm x 30mm x 30mm, Hellma GmbH & Co. KG, DE) mit transparenten, planen Eintrittsfenstern verwendet werden.

In den Fig. 3a bis 3c zeigen schematische Darstellungen für eine Anordnung mit Aufnahmegefäß 1, in welchem das Arbeitsvolumen 2 mit dem hierin aufgenommenen Ausgangsmaterial 3 zum optischen Bearbeiten angeordnet ist. Es ist eine Anordnung von Lichtquellen 30 vorgesehen. Die Lichtquellen 30 (Lichtgeneratoren für Erzeugung des Lichtschnitts 31), die dem Einstrahlen des Lichts erster Wellenlänge (Lichtschnitt) dienen, sind benachbart zum Aufnahmegefäß 1 angeordnet, insbesondere auf gegenüberliegenden Seiten. Bei der Ausgestaltung nach Fig. 3c ist die Anordnung von Lichtquellen 30 um das Aufnahmegefäß 1 mit dem Arbeitsvolumen 2 drehbar angeordnet, was mittels Pfeilen 32 schematisch gezeigt ist.

Zwei oder mehrere der Lichtquellen 30 können benutzt werden, die von unterschiedlichen, insbesondere gegenüber liegenden oder nicht gegenüber liegenden, Seiten des Aufnahmegefäßes 1 in das Arbeitsvolumen 2 einstrahlen und mittels Überlagerung von Teilstrahlen den Lichtschnitt 31 generieren, also das jeweilige Schichtteilvolumen bestrahlen, in welche dann die Projektion 33 hinein erfolgt.

Der Lichtschnitt 31 für das jeweils gerade bestrahlte Schichtteilvolumen ergibt sich durch die Aufsummierung der Einzeleinstrahlungen von den Lichtquellen 30 unter verschiedenen Einstrahlwinkein. Um eine homogene Intensitätsverteilung des Lichtschnitts 31 mittels Überlagerung des Lichts von zwei oder mehrere Lichtquellen zu erzielen, können die Einzeleinstrahlungen anstelle einer homogenen Intensitätsverteilung eine gaußförmige oder eine angepasste inhomogene Intensitätsverteilung aufweisen.

Bei einer weiteren Ausgestaltung nach Fig. 4 werden zwei oder mehrere Lichtschnitte 40 (Schichtteilvolumen) generiert, die unter einem Winkel in das Aufnahmegefäß 1 einfallen. Ein oder mehrere Projektionen

41 von Projektoren (zur Vereinfachung nicht gezeigt in Fig. 4) erzeugen in einer schrägen Fokusebene scharfe Abbildungen innerhalb der einzelnen Lichtschnitte 40. Hierdurch kann eine Prozessierung mehrerer Schichtteilvolumen gleichzeitig erfolgen.

Bei den Ausgestaltungen nach den Fig. 3a bis 3c, 4 kann das Aufnahmegefäß 1 durch den Lichtschnitt 31, 40 bewegt werden, oder der Lichtschnitt 31, 40 bei fester Position des Aufnahmegefäßes 1 verschoben werden, um das Arbeitsvolumen 2 kontinuierlich und schließlich vollständig zu prozessieren, indem dessen Schichtteilvolumen nacheinander optisch bearbeitet werden.

Fig.5 zeigt schematische Darstellungen für eine weitere Anordnung mit Aufnahmegefäß 1. Sowohl ein Lichtschnitt 50 der ersten Wellenlänge als auch ein Projektorbild 51 der zweiten Wellenlänge werden mittels eines Projektionsgeräts 52 erzeugt und dann auf das Aufnahmegefäß 1 eingestrahlt. Eine Anordnung von Lichtreflexionselementen 53, insbesondere Spiegeln, sorgt für die Abspaltung des Lichtschnitts 50 aus einer Strahlachse des Projektionsgerätes 52 und die Einstrahlung des Lichtschnitts 50 quer zum Projektionsbild 51 in das Aufnahmegefäß 1.

In einer Ausführungsform kann das Aufnahmegefäß 1 bewegt werden, um den Lichtstrahl durch das Arbeitsvolumen 2 zu bewegen. Das Projektorbild 51 wird mittels einer variablen Fokusoptik innerhalb des Lichtschnitts 50 scharf abgebildet. In einer weiteren Ausgestaltung bleibt das Aufnahmegefäß 1 unbewegt, und der Lichtschnitt 50 wird bewegt, indem ein Displayelement des Projektionsgerätes 52, zum Beispiel eine LCD- oder ein DMD-Display, aufgeteilt wird in einen zentralen Bereich 54, der das Projektorbild 51 erzeugt, und in zwei seitlich davon gelagerte Bereiche 55, die den Lichtschnitt 50 erzeugen. Hierzu werden Pixel des Displayelements mittels Steuerung der optischen Transmission oder Reflexion des Displayelements so angesteuert, um eine seitliche Verschiebung des Lichtschnitts 50 zu realisieren. Hierbei werden ein zentraler Bereich des Displayelements mit der ersten Wellenlänge und äußere Bereiche des Displayelements mit der zweiten Wellenlänge bestrahlt.

Fig. 6 zeigt eine schematische Darstellung einer weiteren Anordnung zum optischen Bearbeiten des Ausgangsmaterials 3 im Aufnahmegefäß 1. Fig. 7 zeigt eine schematische Teildarstellung der Anordnung aus Fig. 6.

Ein Lichtschnitt 60 wird in einer horizontalen Ebene 61 mittels eines Laserstrahls 62 generiert, der von oben in ein für den Laserstrahl 62 optisch transparentes Tauchrohr 63 eintritt und mittels eines motorgetriebenen, rotierenden Spiegels 64 in das Aufnahmegefäß 1 mit dem Ausgangsmaterial 3 umgelenkt wird. Mittels Rotation entsteht der Lichtschnitt 60 der ersten Wellenlänge. Durch einen Boden 65 des Aufnahmegefäßes 1 wird Projektorlicht 66 zweiter Wellenlänge eingestrahlt, um ein Projektorbild 67 in die horizontalen Ebene 61 des Lichtschnitts 60 scharf abzubilden.

Das Tauchrohr 63 ist nach unten geschlossen. Der motorgetriebene, rotierende Spiegel 64 sowie der Laserstrahlweg 62 sind vom Ausgangsmaterial 3 im Aufnahmegefäß 1 getrennt. Für die Prozessierung des Ausgangsmaterials 3 wird das Tauchrohr 63 hoch oder runter bewegt, wodurch die horizontale Ebene des Lichtschnitts 60 nach oben oder nach unten verschoben wird.

Fig. 8 zeigt eine schematische Darstellung einer weiteren Anordnung zum optischen Bearbeiten des Ausgangsmaterials 3 im Aufnahmegefäß 1 in einer Draufsicht (Fig. 8a) und einer Seitenansicht (Fig. 8b). Der Laserstrahl ausgehend vom Laser 80 wird durch einen Galvanometerscanner 81 durch eine Linse 82 auf einen Spiegelring 83 gelenkt, wodurch ein kreisförmiger Lichtschnitt der ersten Wellenlänge entsteht. Das Licht zweiter Wellenlänge wird durch eine Projektoreinheit 84 bereitgestellt und mit Hilfe eines Spiegels 85 orthogonal zum Lichtschnitt in das Aufnahmegefäß 1 gelenkt.

Nachfolgend werden weitere Aspekte des Verfahrens zum optischen Bearbeiten des Ausgangsmaterials 3 erläutert.

Die lokale Polymerisation des Ausgangsmaterials 3, vermittelt über die Lichtanregung der Fotoinitiatoren, erfolgt durch ein sequentielles Verfahren, bei dem eine Prozessierung Schicht für Schicht im freien Volumen innerhalb des Aufnahmegefäßes 1 erfolgt. Zunächst ist hierfür eine Zerlegung des gewünschten, dreidimensionalen Objektes in einzelne Schichtbilder mit definiertem Rasterabstand vorgesehen (Slicing). Mittels Überlagerung des Lichtschnitts von der Lichtquelle 5 und des jeweiligen Schnittbildes des Projektors 7 erfolgt die Anregung der Dual-Color-Fotoinitiatoren vom Grundzustand A in die aktive Form C, welche die lokale Polymerisation des Ausgangsmaterials 3 initiiert. Nach Ablauf der Belichtungssequenz für die aktuelle Schicht (Schichtteilvolumen) wird durch Bewegung des Aufnahmegefäßes 1 und / oder des Lichtschnitts und des Projektors 7 gemeinsam die Lichtanregung definiert verschoben und die Belichtung einer benachbarten oder beliebigen anderen Schicht (anderes Schichtteilvolumen) vorgenommen. Die Translation der Projektionsanordnung oder des Aufnahmegefäßes 1, die zum Beispiel mittels geeigneter Schrittmotoren realisiert werden kann, kann gegebenenfalls unterhalb des Taillen-Durchmessers des Lichtschnitts liegen, um eine Erhöhung der Auflösung in Bewegungsrichtung zu erzeugen.

Für den zeitlichen Ablauf einer Belichtungssequenz für jedes Schichtteilvolumen gibt es verschiedene Optionen, die je nach Ausgangsmaterial und den Eigenschaften der verwendeten Dual-Color-Fotoinitiatoren zur Anwendung kommen:

Variante (1): Gleichzeitiges Einschalten beider Lichtquellen ($\lambda_1$, $\lambda_2$ und gegebenenfalls $\lambda_3$) mit definierten, gegebenenfalls unterschiedlichen Intensitäten für eine vorgegebene Belichtungszeitspanne. Nach dem gleichzeitigen Abschalten beginnt die Translation des Systems zur nächsten Schicht.

Variante (2): Die erste Lichtquelle 5 (Lichtschnittgenerator) und der Projektor 7 werden zeitlich gepulst betrieben. Die Anzahl, Dauer und Intensität der Impulse sowie der Zeitversatz zwischen den Startflanken beider Impulse können im Rahmen einer definierten Belichtungszeit pro Schichtteilvolumen frei eingestellt werden. Bei der Verwendung mehrerer Impulse innerhalb der Prozessierung eines Schichtteilvolumens können jedem Impuls ein unterschiedliches Bild des Projektors 7 zugeordnet werden. Nach der Belichtungszeit erfolgt die Translation zum nächsten Schichtteilvolumen.

Variante (3): Die erste Lichtquelle 5 (Lichtschnittgenerator) bleibt immer eingeschaltet, während das Projektorbild nach einer definierten Belichtungszeit mit der Translation der Anordnung zur nächsten Schicht, umgeschaltet wird.

Variante (4): Physikalisch mögliche Kombinationen der Varianten (1), (2) und (3).

Das hier vorgestellte volumetrische Verfahren generiert das gewünschte räumliche Objekt durch Polymerisation des Ausgangsmaterials 3 innerhalb des Arbeitsvolumens 2 schichtweise, jedoch lässt es den grundlegenden Aufbau des Ausgangsmaterials 3 unverändert. Dies ist ein Vorteil gegenüber Verfahren, die das Ausgangsmaterial nur in voneinander getrennten Schichten prozessieren können. Durch die schichtweise Belichtung ist das Verfahren prinzipiell schneller als die Polymerisation des Ausgangsmaterials Punkt für Punkt.

Aufgrund der Aufweitung des Lichtschnittes lässt sich ein größerer Bereich des Arbeitsvolumens 2 gleichzeitig und damit schneller prozessieren, was jedoch einen Verlust an Auflösung bedingt.

Die Erzeugung des Lichtschnittes mittels der Lichtquelle 5 bedingt eine Kopplung zwischen dem minimalen Taillendurchmesser und der Divergenz des Strahlbündels, die zu einer Aufweitung des Lichtstrahls zum Rand des Volumens führt. Dadurch lässt sich entweder eine homogene, mittlere Auflösung entlang des Lichtschnittes erzeugen oder eine höhere Auflösung im Bereich der Taille mit stärkerem Abfall zu den Rändern generieren.

Da im zeitlichen Ablauf eine frühere Prozessierung von Schichten ermöglicht ist, die zum Projektor 7 weiter entfernt liegen, wird eine mögliche Beeinflussung der Lichtpropagation des Projektorbildes (Licht zweiter Wellenlänge) durch schon ausgehärtete Schichten vermieden.

Aufgrund der Verschiebung des Lichtschnitts wird jedes Schichtteilvolumen nur einmal prozessiert und erhält damit eine definierte Energiedosis. Dadurch wird die Polymerisierung von ungewünschten Gebieten, bei der Verwendung von nicht-idealen Dual Color Fotoinitiaoren, effektiv vermindert.

Ist die Kinetik der durch die Lichteinstrahlung ausgelösten Reaktionen der Fotoinitiator-Moleküle und des Ausgangsmaterials 3 hinreichend bekannt, erlaubt die gezielte Zeitsteuerung der Lichtimpulse zueinander und geeignete Wahl der Intensitäten beider Wellenlängen eine höhere Diskriminierung zwischen gewünschter und ungewünschter Polymerisation im Arbeitsvolumen 2. Hierdurch lassen sich Artefakte und eine Degradation der Auflösung für nicht-ideale Dual-Color-Fotoinitiatoren vermindern.

## Patentansprüche

**1.** Verfahren zum Herstellen eines optischen Elements mittels Bearbeitens eines optisch reaktiven Materials, aufweisend:

- Bereitstellen eines Ausgangsmaterials (3), welches optisch reaktiv ist und ein Arbeitsvolumen (2) ausfüllt;
- optisches Bearbeiten des Ausgangsmaterials (3) in dem Arbeitsvolumen (2) mittels Einstrahlen von Licht einer ersten Wellenlänge und Licht einer zweiten Wellenlänge, die von der ersten Wellenlänge verschieden ist, wobei mittels des optischen Bearbeitens wenigstens eine Materialeigenschaft des Ausgangsmaterials verändert wird und wobei das optische Bearbeiten Folgendes umfasst:
    - Bestrahlen eines ersten Schichtteilvolumens des mit dem Ausgangsmaterial (3) ausgefüllten Arbeitsvolumens (2) mit dem Licht erster Wellenlänge;
    - Bestrahlen des ersten Schichtteilvolumens des Arbeitsvolumens (2) mit dem Licht zweiter Wellenlänge, wobei das Licht zweiter Wellenlänge hierbei in das Arbeitsvolumen (2) projiziert wird;
    - Bestrahlen eines zweiten Schichtteilvolumens des mit dem Ausgangsmaterial (3) ausgefüllten Arbeitsvolumens (2), welches von dem ersten Schichtteilvolumen verschieden ist, mit dem Licht erster Wellenlänge;
    - Bestrahlen des zweiten Schichtteilvolumens des Arbeitsvolumens (2) mit dem Licht zweiter Wellenlänge, wobei das Licht zweiter Wellenlänge hierbei in das Arbeitsvolumen (2) projiziert wird; und
    - Wiederholen der vorangehenden Schritte zur schichtweisen optischen Bearbeitung des Ausgangsmaterials (3) in dem Arbeitsvolumen (2) bis ein zu bearbeitendes Volumen des Ausgangsmaterials (3), welches das Arbeitsvolumen (2) ganz oder teilweise erfasst, optisch bearbeitet ist, und hierbei aus dem Ausgangsmaterial (3) ein Grünling gebildet ist; und

- Weiterverarbeiten des Grünlings, sodass aus dem Grünling ein optisches Element zumindest teilweise, insbesondere vollständig, gebildet ist.

2. Verfahren nach Anspruch 1, wobei das Weiterverarbeiten des Grünlings mindestens einen der folgenden Schritte aufweist: Entnehmen des Grünlings aus dem Ausgangsmaterial; Behandeln des Grünlings mit einem Lösungsmittel und/oder einem Monomer; Trocknen des gewaschenen Grünlings; und photochemisches und/oder thermisches Nachhärten des Grünlings, wobei optional das Lösungsmittel und/oder das Monomer einen thermischen Initiator und/oder einen weiteren Fotoinitiator aufweist, der bevorzugt nur auf eine Wellenlänge reagiert; und/oder

wobei das Weiterverarbeiten des Grünlings mindestens einen der folgenden Schritte aufweist: Tempern des Grünlings, Schleifen des Grünlings, Polieren des Grünlings und Beschichten des Grünlings;
insbesondere das Nachhärten des Grünlings, unter einer Schutzgasatmosphäre, insbesondere einer Argon-, Kohlenstoffdioxid- oder Stickstoffatmosphäre, durchgeführt wird; und/oder
wobei das Weiterverarbeiten des Grünlings ein photochemisches Nachhärten des Grünlings vermittels wenigstens eines zusätzlichen Photoinitiators umfasst, wobei der zusätzliche Photoinitiator konfiguriert ist, eine ein photochemisches Nachhärten des Grünlings bedingende photochemische Reaktion bei einer von der ersten und der zweiten Wellenlänge verschiedenen Wellenlänge auszuführen, wobei optional der zusätzliche Photoinitiator ein alpha-Diketon, insbesondere Campherchinon, ist oder wenigstens ein alpha-Diketon, insbesondere Campherchinon, enthält, wobei optional der zusätzliche Photoinitiator mit einer Wellenlänge bestrahlt wird, die zwischen der ersten und der zweiten Wellenlänge liegt; und/oder
wobei das Weiterverarbeiten des Grünlings ein Behandeln des Grünlings mit einem Lösungsmittel und/oder einem Monomer, insbesondere zum Waschen des Grünlings, beinhaltet, wobei ein Lösungsmittel und/oder ein Monomer mit einer Molmasse größer oder gleich 200 g/mol verwendet wird; und/oder
wobei das Weiterverarbeiten des Grünlings ein Behandeln des Grünlings mit einem Lösungsmittel und/oder einem Monomer, insbesondere zum Waschen des Grünlings, beinhaltet, wobei ein leicht flüchtiges Lösungsmittel und/oder ein leicht flüchtiges Monomer verwendet wird.

3. Verfahren nach mindestens einem der vorangehenden Ansprüche, wobei das Ausgangsmaterial eine transparente Monomermischung und/oder eine transparente Oligomermischung aufweist.

4. Verfahren nach mindestens einem der vorangehenden Ansprüche, wobei das Ausgangsmaterial eine Viskosität von $10^2$ mPa · s bis $10^7$ mPa · s und/oder eine Fließgrenze von wenigstens 0,1 Pa aufweist, oder das Ausgangsmaterial ein nicht-Newtonisches rheologisches Verhalten aufweist.

5. Verfahren nach mindestens einem der vorangehenden Ansprüche, wobei das Ausgangsmaterial wenigstens ein Additiv, z. B. einen Füllstoff, ein Thixotrop bzw. einen Rheologiemodifier, einen Entschäumer, einen Stabilisator, einen Sauerstofffänger, ein nicht reaktives Lösungsmittel oder Verdünnungsmittel und einen Farbstoff, enthält.

6. Verfahren nach mindestens einem der vorangehenden Ansprüche, wobei das Ausgangsmaterial Wasser enthält, wobei optional der Anteil an Wasser zwischen 5 und 99,9 Gew.-%, insbesondere zwischen 30 und 99,9 Gew.-%, weiter insbesondere zwischen 80 und 99,9 Gew.-%, ist, wobei optional das Ausgangsmaterial Additive, wie z. B. Rheologiemodifier, z. B. in Form von Polyacrylsäure, Gelatine, etc., löslich in Wasser bzw. dem Wasser-Monomer- bzw. Wasser-Oligomer-Gemisch oder mischbar mit Wasser bzw. dem Wasser-Monomer- bzw. Wasser-Oligomer-Gemische enthält, wobei optional eine entsprechende Löslichkeit bzw. Mischbarkeit der Additive in bzw. mit Wasser in einem Temperaturbereich zwischen 20 und 40°C, insbesondere zwischen 25 und 37°C, alternativ zwischen 20 und 30°C, weiter alternativ zwischen 35 und 40°C, gewährleistet ist, wobei optional das Ausgangsmaterial einen oder mehrere der folgenden Gelbildner, welcher ebenso als Rheologiemodifier dienen kann, enthält: ein Polymer, insbesondere ein Polymer mit Carbonsäuren, wie z. B. Polyacrylsäure, oder quervernetzter Polyacrylsäure; oder ein Polyvinylalkohol oder ein Derivat davon; oder ein Polysaccharid oder ein Derivat davon; oder ein Peptid bzw. Protein oder ein Derivat davon, insbesondere gamma-Carrageen; oder Gelatine oder ein Derivat davon,
wobei optional das Ausgangsmaterial ein oder mehrere in Wasser lösliche und/oder mit Wasser mischbare Additive enthält, welche in ihrer Zusammensetzung insbesondere so gewählt sind, dass sie einen pH-Wert im Bereich zwischen 5 und 10, insbesondere zwischen 6 und 9, weiter insbesondere zwischen 7 und 8, weiter insbesondere von 7,4, aufweisen, wodurch insbesondere ein unerwünschtes Ausfallen von Additiven und/oder eine unerwünschte Emulsionsbildung verhindert bzw. zumindest reduziert wird.

7. Verfahren nach mindestens einem der vorangehenden Ansprüche, wobei das Bilden des optischen Elements ein Bilden mindestens eines von einer optischen Linse, einer Linse mit Abbildungsqualität, einer Intraokularlinse, einem Linsenarray, einem Diffusor, einem Prisma, einem optischen Gitter, einem diffraktiven optischen Element und einem Lichtwellenleiter umfasst.

**8.** Verfahren nach mindestens einem der vorangehenden Ansprüche, wobei beim Ausgangsmaterial (3) mindestens ein Funktionselement bereitgestellt ist und das optische Element zumindest teilweise an das mindestens eine Funktionselement anliegend gebildet ist, wobei optional das mindestens eine Funktionselement mindestens eines von folgenden Elementen aufweist: ein Aktorelement, ein Sensorelement, ein Energiequellenelement, ein Display, eine Linsenhaltung und mindestens ein vorgefertigtes weiteres optisches Element, wobei optional das mindestens eine Funktionselement einen Brechungsindex aufweist, der von einem Ausgangsmaterial-Brechungsindex um höchstens 3 % abweicht, wobei optional beim optischen Bearbeiten das Ausgangsmaterial um das mindestens eine Funktionselement mit Licht erster Wellenlänge und Licht zweiter Wellenlänge von mindestens zwei Seiten bestrahlt wird.

**9.** Verfahren nach mindestens einem der vorangehenden Ansprüche, wobei das Licht erster Wellenlänge mittels mehrerer Lichtgeneratoren für die Erzeugung eines Lichtschnitts eingestrahlt wird, die von unterschiedlichen Seiten eines das Arbeitsvolumen aufweisenden Arbeitsgefäßes in das Arbeitsvolumen einstrahlen und mittels Überlagerung von Teilstrahlen den Lichtschnitt generieren, in welchen die Projektion erfolgt, wobei optional das Licht erster Wellenlänge mittels vier Lichtgeneratoren für die Erzeugung eines Lichtschnitts eingestrahlt wird, die, insbesondere paarweise gegenüber liegend, von unterschiedlichen Seiten eines das Arbeitsvolumen aufweisenden Arbeitsgefäßes in das Arbeitsvolumen einstrahlen und mittels Überlagerung von Teilstrahlen den Lichtschnitt generieren, in welchen die Projektion erfolgt, wobei optional wenigstens zwei unterschiedlich ausgerichtete Lichtschnitte erzeugt werden, insbesondere wenigstens zwei unterschiedlich ausgerichtete Lichtschnitte, welche in dem Arbeitsvolumen überlappen, wobei optional bestimmt wird, ob das erste oder das zweite Schichtteilvolumen mit der ersten Wellenlänge bestrahlt wird, und eine Projektionseinrichtung (7) zum Projizieren des Lichts zweiter Wellenlänge in das Arbeitsvolumen in Abhängigkeit hiervon angesteuert wird, das Licht zweiter Wellenlänge in das erste oder in das zweite Schichtteilvolumen, insbesondere in einer bestimmten Intensitätsverteilung, zu projizieren.

**10.** Verfahren nach mindestens einem der vorangehenden Ansprüche, wobei das Licht erster Wellenlänge zunächst in dem ersten Schichteilvolumen und dann in dem zweiten Schichtteilvolumen mit einer in Bezug auf mindestens einen der folgenden Lichtparameter im Wesentlichen homogenen oder nicht-homogenen Verteilung eingestrahlt wird: Lichtintensität und Lichtfarbe.

**11.** Verfahren nach mindestens einem der vorangehenden Ansprüche, wobei ein Lichtschnitt in dem Arbeitsvolumen (2) erzeugt wird, insbesondere ein Lichtschnitt des Lichts der ersten Wellenlänge, und während der Bewegung des Lichtschnitts durch das Arbeitsvolumen (2) kontinuierlich eine Fokuskorrektur, insbesondere eine Fokuskorrektur des Lichts der zweiten Wellenlänge, erfolgt.

**12.** Verfahren nach mindestens einem der vorangehenden Ansprüche, wobei das Ausgangsmaterial vor dem Bestrahlen wenigstens einem Vorgang zum Entfernen von Verunreinigungen, insbesondere partikulären Verunreinigungen, unterzogen wird, wobei der Vorgang insbesondere ein Filtrieren des Ausgangsmaterials vermittels einer Filtereinrichtung umfasst, wobei optional ein Ausgangsmaterial verwendet wird, welches frei von anorganischen und/oder organischen Partikeln, insbesondere frei von anorganischen und/oder organischen Partikeln mit einem Durchmesser größer 50 $\mu$m, ist, wobei optional ein Ausgangsmaterial verwendet wird, welches ausschließlich organische Bestandteile enthält, wobei optional ein Ausgangsmaterial verwendet wird, welches frei von organischen Polymeren ist.

**13.** Verfahren nach mindestens einem der vorangehenden Ansprüche, wobei das herzustellende optische Element eine Haupterstreckungsebene aufweisende flächige geometrische Gestalt aufweist, wobei die Aufbaurichtung des optischen Elements winklig, insbesondere rechtwinklig, zu der Haupterstreckungsebene gewählt wird, wobei optional die Aufbau- bzw. Druckrichtung von oben nach unten, oder umgekehrt, gewählt ist, wobei optional die Aufbau- bzw. Druckrichtung entlang einer vertikalen Achse ausgerichtet ist.

**14.** Verfahren nach mindestens einem der vorangehenden Ansprüche, wobei mindestens eine erste Bestrahlungseinrichtung verwendet wird, die so konfiguriert ist, dass sie Licht der ersten Wellenlänge in das Arbeitsvolumen (2) einstrahlt, um mindestens eine erste Lichtprojektion in dem Arbeitsvolumen zu erzeugen, wobei die mindestens eine erste Lichtprojektion mehrere Lichtstrahlen umfasst, die das Arbeitsvolumen (2) in mindestens einer Lichtebene durchlaufen; und
mindestens eine Lichtmodulationsvorrichtung verwendet wird, die der mindestens einen ersten Bestrahlungseinrichtung zugeordnet ist, wobei die mindestens eine Lichtmodulationsvorrichtung so konfiguriert ist, dass sie die räumliche Ausdehnungsrichtung von zwei oder mehr Lichtstrahlen der mehreren Strahlen in der mindestens einen Lichtebene so moduliert, dass sich die zwei oder mehr Lichtstrahlen in einer nicht parallelen Anordnung relativ zueinander erstrecken, wobei optional die mindestens eine Lichtmodulationsvorrichtung ein oder mehrere optische Elemente umfasst, wobei jedes optische Element so konfiguriert ist, dass es die ursprüngliche räumliche Ausdehnungsrichtung eines einfallenden Lichtstrahls ändert, um einen Lichtstrahl zu erzeugen, der eine andere räumliche Ausdehnungsrichtung relativ zur ursprünglichen räumlichen Ausdehnungsrichtung aufweist, wobei optional die optischen Elemente als optische Linsen, insbesondere Mikrolinsen, und/oder optische Diffusorelemente, insbesondere elliptische Diffusorelemente, ausgebildet sind oder diese umfassen.

**15.** Verfahren nach mindestens einem der vorangehenden Ansprüche, wobei mindestens eine Maßnahme zur Veränderung der optischen Eigenschaften des Grünlings durchgeführt wird, wobei
die mindestens eine Maßnahme vorzugsweise die Veränderung der optischen Eigenschaften des Grünlings umfasst, die zu einer Verringerung der Absorptionseigenschaften des Grünlings für mindestens eine Wellenlänge in einem Wellenlängenbereich zwischen 300 nm und 2000 nm, insbesondere zwischen 350 nm und 900 nm, und/oder zu einer Erhöhung der Durchlässigkeitseigenschaften des Grünlings für mindestens eine Wellenlänge in dem Wellenlängenbereich zwischen 300 nm und 2000 nm, insbesondere in dem Wellenlängenbereich zwischen 350 nm und 900 nm, insbesondere in dem Wellenlängenbereich zwischen 400 nm und 800 nm führt, wobei optional die mindestens eine Maßnahme eine thermische Behandlung des Grünlings und/oder eine optische Behandlung des Grünlings, insbesondere durch Bestrahlen des Grünlings mit elektromagnetischer Strahlung, und/oder eine chemische Behandlung des Grünlings umfasst.

## Claims

**1.** A method for producing an optical element by processing an optically reactive material, comprising:

- providing a starting material (3) which is optically reactive and fills a working volume (2);
- optical processing of the starting material (3) in the working volume (2) by means of irradiation of light of a first wavelength and light of a second wavelength, which is different from the first wavelength, wherein at least one material property of the starting material is changed by means of the optical processing and wherein the optical processing comprises the following:
    - irradiation of a first layer part volume of the working volume (2) filled in with the starting material (3) with the light of the first wavelength;
    - irradiation of the first layer portion volume of the working volume (2) with the light of the second wavelength, wherein the light of the second wavelength is projected into the working volume (2);
    - irradiation of a second layer part volume of the working volume (2) filled in with the starting material (3), which is different from the first layer part volume, with the light of the first wavelength;
    - irradiation of the second layer part volume of the working volume (2) with the light of the second wavelength, wherein the light of the second wavelength is projected into the working volume (2); and
    - Repeating the preceding steps for layered optical processing of the starting material (3) in the working volume (2) to a volume of the starting material (3) to be processed, which captures the working volume (2) in whole or in part, is optically processed, and in this case a green leaf is formed from the starting material (3); and
- Further processing of the greenling, so that an optical element is formed from the greenling at least partially, in particular completely.

**2.** The method of claim 1, wherein further processing of the greenling comprises at least one of the following steps: removal of the greenling from the starting material; treating the greenling with a solvent and/or a monomer; drying the washed greenling; and photochemical and / or thermal post-curing of the greenling, wherein optionally the solvent and / or monomer has a thermal initiator and / or another photoinitiator, which preferably reacts only to a wavelength; and/or

where the further processing of the greenling has at least one of the following steps: tempering of the greenling, grinding of the greenling, polishing of the greenling and coating of the greenling; in particular, the post-curing of the greenling is carried out under a protective gas atmosphere, in particular an argon, carbon dioxide or nitrogen atmosphere; and/or wherein further processing of the greenling comprises photochemical post-curing of the greenling by means of at least one additional photoinitiator, wherein

the additional photoinitiator is configured to carry out a photochemical post-curing of the greenling conditional photochemical reaction at a wavelength different from the first and second wavelengths, wherein optionally the additional photoinitiator is an alpha-diketone, in particular campherquinone, or at least contains an alpha-diketone, in particular campherquinone, wherein optionally the additional photoinitiator is irradiated with a wavelength that lies between the first and second wavelengths; and/or

wherein further processing of the greenling involves treating the greenling with a solvent and/or a monomer, in particular for washing the greenling, using a solvent and/or a monomer having a molar mass greater than or equal to 200 g/mol; and/or

wherein further processing of the greenling involves treating the greenling with a solvent and/or a monomer, in particular for washing the greenling, wherein a slightly volatile solvent and/or a slightly volatile monomer is used.

**3.** The method according to at least one of the preceding claims, wherein the starting material comprises a transparent monomer mixture and / or a transparent oligomer mixture.

**4.** The method according to at least one of the preceding claims, wherein the starting material has a viscosity of $10^2$ mPa·s to $10^7$ mPa·s and / or a flow limit of at least 0.1 Pa, or the starting material has a non-Newtonian rheological behavior.

**5.** The method according to at least one of the preceding claims, wherein the starting material contains at least one additive, e.g. a filler, a thixotrope or a rheology modifier, a defoamer, a stabilizer, an oxygen trap, a non-reactive solvent or diluent and a dye.

**6.** The method according to at least one of the preceding claims, wherein the starting material contains water, wherein optionally the proportion of water between 5 and 99.9 wt .-%, in particular between 30 and 99.9 wt .-%, further in particular between 80 and 99.9 wt .-%, wherein optionally the starting material contains additives, such as e.g. rheology modifier, e.g. in the form of polyacrylic acid, gelatin, etc., soluble in water or the water-monomer or water-oligomer mixture or miscible with water or the water-monomer or water-oligomer mixture, wherein optionally a corresponding solubility or miscibility of the additives in or with water in a temperature range between 20 and 40 °C, in particular between 25 and 37 °C, alternatively between 20 and 30 °C, alternatively between 35 and 40 °C is ensured, wherein optionally the starting material or several of the following gel image can also serve as a rmodifier: a polymer, in particular a polymer with carboxylic acids, such as polyacrylic acid, or cross-linked polyacrylic acid; or a polyvinyl alcohol or a derivative thereof; or a polysaccharide or a derivative thereof; or a peptide or protein or a derivative thereof, in particular gamma carrageenan; or gelatine or a derivative thereof,

optionally, the starting material contains one or more additives soluble in water and / or miscible with water, which are selected in their composition in particular so that they have a pH value in the range between 5 and 10, in particular between 6 and 9, further in particular between 7 and 8, further in particular of 7.4, whereby in particular an undesirable failure of additives and / or an undesirable emulsion formation is prevented or at least reduced.

**7.** The method according to at least one of the preceding claims, wherein the forming of the optical element comprises forming at least one of an optical lens, a lens with imaging quality, an intraocular lens, a lens array, a diffuser, a prism, an optical lattice, a diffractive optical element and a optical fiber.

**8.** The method according to at least one of the preceding claims, wherein at least one functional element is provided in the starting material (3) and the optical element is formed at least partially adjacent to the at least one functional element, wherein optionally the at least one functional element has at least one of the following elements: an actuator element, a sensor element, an energy source element, a display, a lens position and at least one prefabricated further optical element, wherein optionally the at least one functional element has a refractive index that deviates from a source material refractive index by a maximum of 3 %, wherein optionally, during optical processing, the source material is irradiated by the at least one functional element with light of the first wavelength and light of the second wavelength of at least two sides.

**9.** The method according to at least one of the preceding claims, wherein the light of the first wavelength is irradiated by means of several light generators for the generation of a light section, which radiate from different sides of a working vessel having the working volume into the working volume and generate the light section by means of superimposition of partial beams, in which the projection takes place, optionally the light of the first wavelength is irradiated by means of four light generators for the generation of a light section, which, in particular lying in pairs opposite, radiate from different sides of a working vessel having the working volume into the working volume and generate the light section by means of superimposition of partial beams, in which the projection takes place, optionally at least two differently aligned

light sections are generated, in particular at least two differently aligned light sections, which overlap in the working volume, optionally determining whether the first or the second layer part volume is irradiated with the first wavelength, and a projection device (7) for projecting the light of second wavelength into the working volume depending on this is controlled to project the light of second wavelength into the first or second layer part volume, in particular in a certain intensity distribution.

**10.** The method according to at least one of the preceding claims, wherein the light of the first wavelength is emitted first in the first layer rapid volume and then in the second layer partial volume with a substantially homogeneous or non-homogeneous distribution with respect to at least one of the following light parameters: Light intensity and light color.

**11.** The method according to at least one of the preceding claims, wherein a light section is generated in the working volume (2), in particular a light section of the light of the first wavelength, and during the movement of the light section through the working volume (2) continuously a focus correction, in particular a focus correction of the light of the second wavelength, takes place.

**12.** The method according to at least one of the preceding claims, wherein the starting material is subjected to at least one process for removing impurities, in particular particulate impurities, wherein the process comprises in particular a filtration of the starting material by means of a filter device, wherein optionally a starting material is used which is free of inorganic and / or organic particles, in particular free of inorganic and / or organic particles with a diameter greater than 50 $\mu$m, wherein optionally a starting material is used which contains exclusively organic components, wherein optionally a starting material is used which is free of organic polymers.

**13.** The method according to at least one of the preceding claims, wherein the optical element to be manufactured has a main extension plane having flat geometric shape, wherein the construction direction of the optical element is chosen angularly, in particular perpendicularly, to the main extension plane, wherein optionally the construction or pressure direction is chosen from top to bottom, or vice versa, wherein optionally the construction or pressure direction is aligned along a vertical axis.

**14.** The method according to at least one of the preceding claims, using at least one first irradiation device configured to emit light of the first wavelength into the working volume (2) to produce at least one first light projection in the working volume, wherein the at least one first light projection comprises several light beams passing through the working volume (2) in at least one light plane; and
at least one light modulation device is used, which is assigned to the at least one first irradiation device, wherein the at least one light modulation device is configured to extend the spatial expansion direction of two or more light beams of the multiple beams in the at least one light plane so that the two or more light beams extend relative to each other in a non-parallel arrangement, wherein optionally the at least one light modulation device comprises one or more optical elements, each optical element is configured to change the original spatial expansion direction of an incident light beam to produce a light beam having a different spatial expansion direction relative to the original spatial expansion direction, wherein optionally the optical elements are formed as optical lenses, in particular microlenses, and / or optical diffuser elements, in particular elliptical diffuser elements, or comprise these.

**15.** The method according to at least one of the preceding claims, wherein at least one measure for changing the optical properties of the greenling is carried out, wherein the at least one measure preferably includes the modification of the optical properties of the greenling, which leads to a reduction in the absorption properties of the greenling for at least one wavelength in a wavelength range between 300 nm and 2000 nm, in particular between 350 nm and 900 nm, and / or to an increase in the transmittance properties of the greenling for at least one wavelength in the wavelength range between 300 nm and 2000 nm, in particular in the wavelength range between 350 nm and 900 nm, in particular in the wavelength range between 400 nm and 800 nm, optionally the at least one measure includes a thermal treatment of the greenling and / or an optical treatment of the greenling, in particular by irradiating the greenling with electromagnetic radiation, and / or a chemical treatment of the greenling.

## Revendications

**1.** Procédé de fabrication d'un élément optique par usinage d'un matériau optiquement réactif, comportant:

- mise à disposition d'une matière première (3) visuellement réactive et remplissant un volume de travail (2);
- traitement optique de la matière première (3) dans le volume de travail (2) en émettant une lumière d'une première longueur d'onde et une lumière d'une seconde longueur d'onde différente de la première longueur d'onde, le traitement optique modifiant au moins une propriété matérielle de la matière première et comprenant:

- irradiation à la lumière de la première longueur d'onde d'un premier volume partiel de couche du volume de travail rempli avec le matériau de départ (3);
- irradiation du premier volume partiel de couche du volume de travail (2) avec la lumière de deuxième longueur d'onde, la lumière de deuxième longueur d'onde étant projetée dans le volume de travail (2);
- irradiation à la lumière de la première longueur d'onde d'un deuxième volume de partie de couche du volume de travail (2) rempli avec le matériau de départ (3), différent du premier volume de partie de couche;
- irradiation du deuxième volume partiel de couche du volume de travail (2) avec la lumière de deuxième longueur d'onde, la lumière de deuxième longueur d'onde étant projetée dans le volume de travail (2); et
- Répéter les étapes précédentes pour le traitement optique par couche du matériau de base (3) dans le volume de travail (2) jusqu'à ce qu'un volume de matériau de base (3) à traiter, qui enregistre tout ou partie du volume de travail (2), soit traité optiquement et que le matériau de base (3) soit formé d'un écorce; et

- Traitement ultérieur de l'écorce, de sorte qu'un élément optique est formé à partir de l'écorce, au moins partiellement, en particulier complètement.

**2.** Procédé selon la revendication 1, dans lequel le traitement ultérieur de l'écorce comporte au moins l'une des étapes suivantes: extraction de l'écorce du matériel de base; traitement de l'écorce avec un solvant et/ou un monomère; séchage de l'écorce lavée; et post-durcissement photochimique et/ou thermique de l'écorce, le solvant et/ou le monomère ayant éventuellement un initiateur thermique et/ou un autre photo-initiateur qui ne réagit de préférence qu'à une seule longueur d'onde; et/ou

le traitement ultérieur de l'écorce comporte au moins l'une des étapes suivantes: la trempe de l'écorce, le ponçage de l'écorce, le polissage de l'écorce et le revêtement de l'écorce; en particulier, le post-durcissement de l'écorce est effectué sous une atmosphère protectrice, en particulier sous une atmosphère d'argon, de dioxyde de carbone ou d'azote; et/ou le traitement ultérieur de l'écorce implique une post-durcissement photochimique de l'écorce au moyen d'au moins un photo-initiateur supplémentaire, le photo-initiateur supplémentaire étant configuré pour effectuer une réaction photochimique impliquant une post-durcissement photochimique de l'écorce à une longueur d'onde différente de la première et de la deuxième longueur d'onde, le photo-initiateur supplémentaire étant, en option, un alpha-dicéton, en particulier le campherquinone, ou contenant au moins un alpha-dicéton, en particulier le campherquinone, le photo-initiateur supplémentaire étant, en option, irradié avec une longueur d'onde comprise entre la première et la deuxième longueur d'onde; et/ou la transformation de l'écorce implique le traitement de l'écorce avec un solvant et/ou un monomère, en particulier pour le lavage de l'écorce, à l'aide d'un solvant et/ou d'un monomère dont la masse molaire est égale ou supérieure à 200 g/mol; et/ou

la transformation de l'écorce implique le traitement de l'écorce avec un solvant et/ou un monomère, en particulier pour le lavage de l'écorce, à l'aide d'un solvant et/ou d'un monomère légèrement volatils.

**3.** Procédé selon au moins une des revendications précédentes, dans lequel le matériau de base présente un mélange de monomères transparents et/ou un mélange d'oligo-mères transparents.

**4.** Procédé selon au moins une des revendications précédentes, dans lequel le matériau de base a une viscosité de $10^2$ mPa·s à $10^7$ mPa·s et/ou une limite d'écoulement d'au moins 0,1 Pa, ou le matériau de base a un comportement rhéologique non newtonien.

**5.** Procédé selon au moins une des revendications précédentes, dans lequel la matière première contient au moins un additif, par exemple une charge, un thixotrope ou un modificateur rhéologique, un antimousse, un stabilisant, un capteur d'oxygène, un solvant ou un diluant non réactif et un colorant.

**6.** Procédé selon au moins l'une des revendications précédentes, dans lequel le matériau de départ contient de l'eau, dans lequel, en option, la proportion d'eau est comprise entre 5 et 99,9 % en poids, en particulier entre 30 et 99,9 % en poids, en outre, en particulier entre 80 et 99,9 % en poids, dans lequel, en option, le matériau de départ contient des additifs, tels que des modificateurs de rhéologie, par exemple sous forme d'acide polyacrylique, de gélatine, etc., solubles dans l'eau ou dans le mélange eau-monomère ou eau-oligomère, ou miscibles avec de l'eau

ou le mélange eau-monomère ou eau-oligomère, en option, dans lequel une solubilité correspondante ou la miscibilité des additifs dans ou avec de l'eau dans une plage de température comprise entre 20 et 40°C, en particulier entre 25 et 37°C, en alternativement entre 20 et 30°C, en alternativement entre 35°C, est garantie, en option, dans lequel le matériau de départ ou plusieurs des images de gel suivantes, qui peuvent également servir de modificateur: un polymère, en particulier un polymère contenant des acides carboxyliques tels que l'acide polyacrylique ou l'acide polyacrylique réticulé; ou un alcool polyvinylique ou un de ses dérivés; ou un polysaccharide ou un dérivé de celui-ci; ou un peptide, une protéine ou un dérivé de ceux-ci, en particulier le gamma-carraghénane; ou de la gélatine ou un de ses dérivés,

en option, la matière première contient un ou plusieurs additifs solubles dans l'eau et/ou miscibles dans l'eau, dont la composition est choisie notamment pour avoir un pH compris entre 5 et 10, en particulier entre 6 et 9, en particulier entre 7 et 8, en particulier entre 7,4, ce qui permet notamment d'éviter ou au moins de réduire la défaillance indésirable d'additifs et/ou la formation indésirable d'émulsions.

7. Procédé selon au moins une des revendications précédentes, dans lequel l'imagerie de l'élément optique comprend l'imagerie d'au moins une lentille optique, d'une lentille de qualité d'imagerie, d'une lentille intraoculaire, d'un tableau de lentilles, d'un diffuseur, d'un prisme, d'une grille optique, d'un élément optique diffractif et d'une fibre optique.

8. Procédé selon au moins une des revendications précédentes, dans lequel, dans le matériau de base (3), au moins un élément fonctionnel est fourni et l'élément optique est formé au moins partiellement par rapport à au moins un élément fonctionnel, dans lequel, en option, au moins un élément fonctionnel comporte au moins l'un des éléments suivants: un élément actionneur, un élément capteur, un élément source d'énergie, un écran, une position de lentille et au moins un autre élément optique préfabriqué, avec, en option, au moins un élément fonctionnel ayant un indice de réfraction ne s'écartant pas de plus de 3 % d'un indice de réfraction du matériau de départ, avec, en option pour l'usinage optique, le matériau de départ autour duquel au moins un élément fonctionnel est irradié avec une lumière de première longueur d'onde et une lumière de deuxième longueur d'onde d'au moins deux côtés.

9. Procédé selon au moins l'une des revendications précédentes, dans lequel la lumière de première longueur d'onde est émise au moyen de plusieurs générateurs de lumière pour la génération d'une coupe de lumière, qui rayonnent dans le volume de travail de différents côtés d'un récipient de travail présentant le volume de travail et qui produisent, au moyen d'une superposition de faisceaux partiels, la coupe de lumière dans laquelle la projection est effectuée, la lumière de première longueur d'onde étant émise, en option, au moyen de quatre générateurs de lumière pour la génération d'une coupe de lumière, qui rayonnent dans le volume de travail de différents côtés d'un récipient de travail présentant le volume de travail, en particulier par paires, et qui produisent, au moyen d'une superposition de faisceaux partiels, la coupe de lumière dans laquelle la projection est effectuée, en produisant, en option, au moins deux coupes de lumière d'orientation différente, en particulier au moins deux coupes de lumière d'orientation différente, qui se chevauchent dans le volume de travail, en déterminant en option si le premier ou le deuxième volume de couche est irradié avec la première longueur d'onde, et un dispositif de projection (7) pour projeter la lumière de deuxième longueur d'onde dans le volume de travail, en fonction de la projection de la lumière de deuxième longueur d'onde dans le premier ou le deuxième volume partiel de couche, en particulier dans une certaine distribution d'intensité.

10. Procédé selon au moins l'une des revendications précédentes, dans lequel la lumière de première longueur d'onde est d'abord émise dans le premier volume de stratification, puis dans le second volume partiel de stratification, avec une distribution substantiellement homogène ou non homogène en ce qui concerne au moins l'un des paramètres de lumière suivants: Intensité lumineuse et couleur de la lumière.

11. Procédé selon au moins l'une des revendications précédentes, dans lequel une coupe de lumière est produite dans le volume de travail (2), en particulier une coupe de lumière de la première longueur d'onde, et pendant le mouvement de la coupe de lumière dans le volume de travail (2), une correction de mise au point est effectuée en continu, en particulier une correction de mise au point de la lumière de la deuxième longueur d'onde.

12. Procédé selon au moins une des revendications précédentes, dans lequel le matériau de base est soumis, avant l'irradiation, à au moins un procédé d'élimination des impuretés, en particulier des impuretés particulaires, ce procédé comprenant notamment une filtration du matériau de base au moyen d'un dispositif de filtration, en utilisant, en option, un matériau de base exempt de particules inorganiques et/ou organiques, en particulier de particules inorganiques et/ou organiques d'un diamètre supérieur à 50 $\mu$m, en utilisant, en option, un matériau de base

contenant exclusivement des composants organiques, en utilisant, en option, un matériau de base exempt de polymères organiques.

**13.** Procédé selon au moins l'une des revendications précédentes, dans lequel l'élément optique à fabriquer présente une forme géométrique plane présentant un plan d'extension principal, dans lequel la direction de la structure de l'élément optique est choisie de manière inclinée, en particulier perpendiculaire, par rapport au plan d'extension principal, dans lequel la direction de la structure ou de la pression est choisie en option de haut en bas, ou vice versa, dans lequel la direction de la structure ou de la pression est orientée, en option, le long d'un axe vertical.

**14.** Procédé selon au moins l'une des revendications précédentes, en utilisant au moins un premier dispositif d'irradiation configuré pour émettre de la lumière de la première longueur d'onde dans le volume de travail (2) afin de produire au moins une première projection de lumière dans le volume de travail, comprenant au moins une première projection de lumière de plusieurs faisceaux de lumière passant par le volume de travail (2) dans au moins un plan de lumière; et
au moins un dispositif de modulation de la lumière associé à au moins un premier dispositif d'irradiation, dont au moins un dispositif de modulation de la lumière est configuré pour moduler la direction de dilatation spatiale de deux ou plusieurs faisceaux lumineux de plusieurs faisceaux dans au moins un plan lumineux de manière à ce que les deux ou plusieurs faisceaux lumineux s'étendent l'un par rapport à l'autre dans une configuration non parallèle, avec, en option, au moins un dispositif de modulation de la lumière comprenant un ou plusieurs éléments optiques, chaque élément optique étant configuré pour modifier la direction de dilatation spatiale initiale d'un faisceau lumineux incident afin de produire un faisceau lumineux ayant une direction de dilatation spatiale différente par rapport à la direction de dilatation spatiale initiale, les éléments optiques étant formés ou comprenant, en option, des lentilles optiques, en particulier des microlentilles, et/ou des éléments de diffuseur optique, en particulier des éléments de diffuseur elliptique.

**15.** Procédé selon au moins une des revendications précédentes, dans lequel au moins une action est effectuée pour modifier les caractéristiques optiques de l'écorce, dans lequel:
au moins une mesure comprenant de préférence la modification des caractéristiques optiques de l'ébauche, entraînant une réduction des caractéristiques d'absorption de l'ébauche pour au moins une longueur d'onde dans une gamme de longueurs d'onde comprise entre 300 nm et 2000 nm, en particulier entre 350 nm et 900 nm, et/ou une augmentation des caractéristiques de perméabilité de l'ébauche pour au moins une longueur d'onde dans la gamme de longueurs d'onde comprise entre 300 nm et 2000 nm, en particulier dans la gamme de longueurs d'onde comprise entre 350 nm et 900 nm, en particulier dans la gamme de longueurs d'onde comprise entre 400 nm et 800 nm, avec, en option, au moins une mesure comprenant un traitement thermique de l'ébauche et/ou un traitement optique de l'ébauche, notamment par irradiation électromagnétique, et/ou un traitement chimique de l'ébauche.

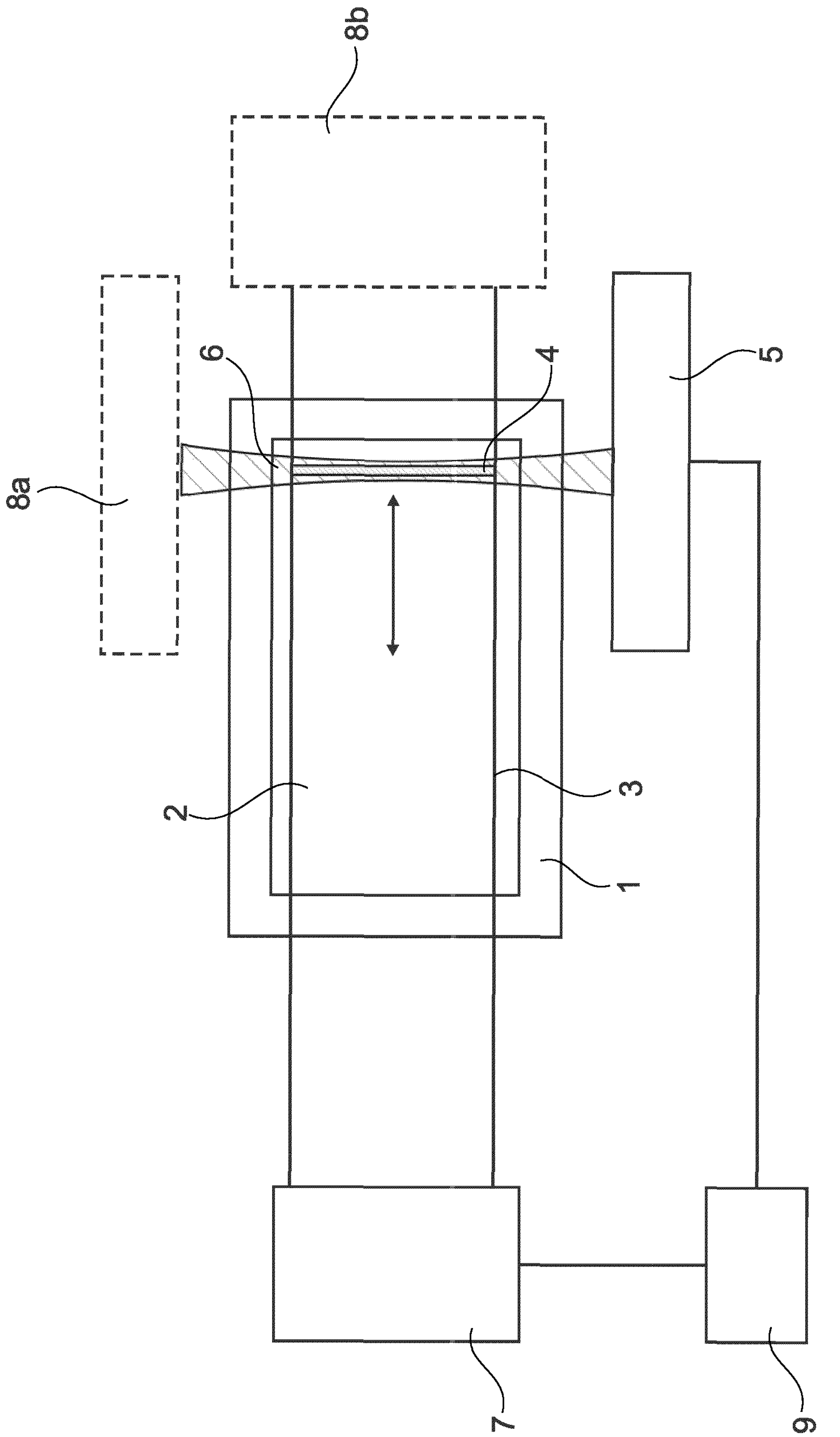


Fig. 1

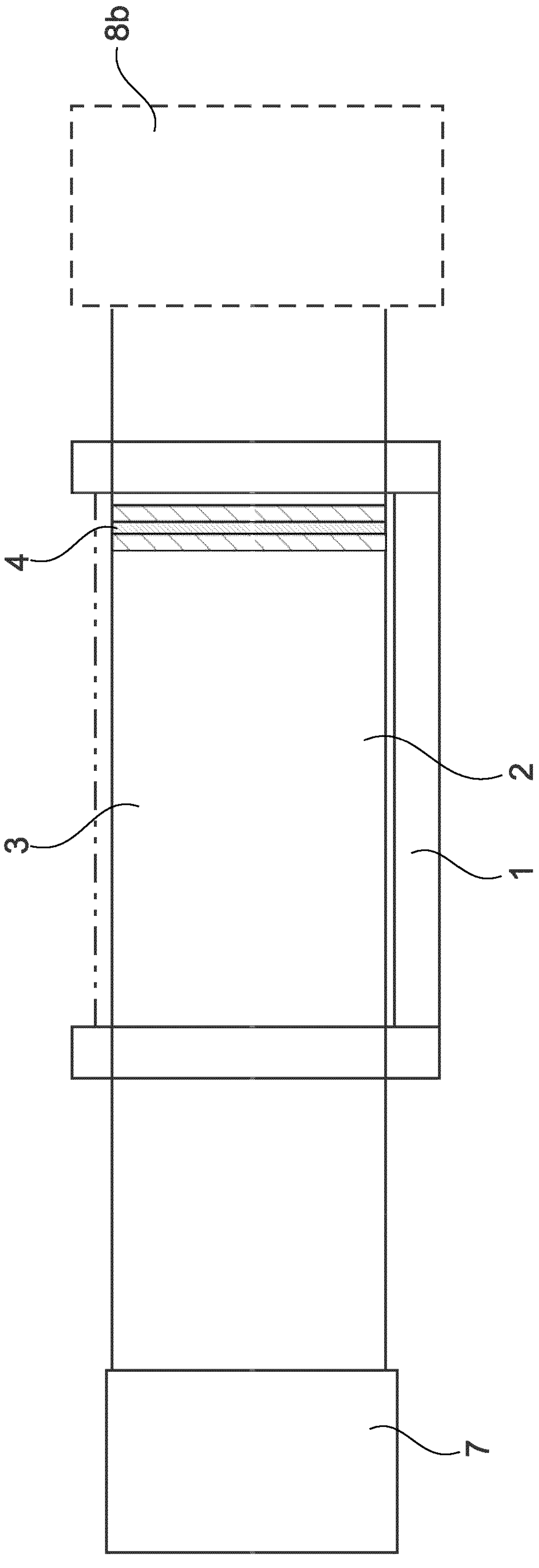


Fig. 2

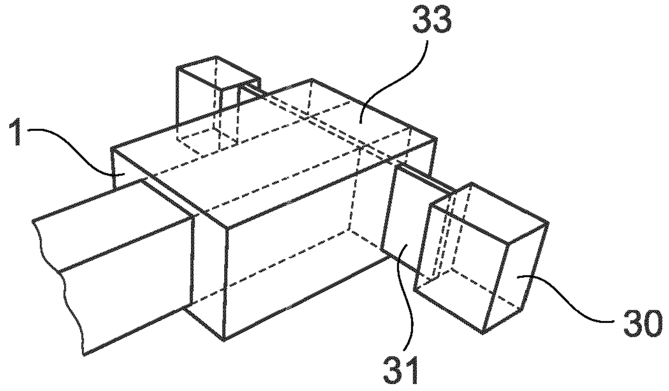


Fig. 3a

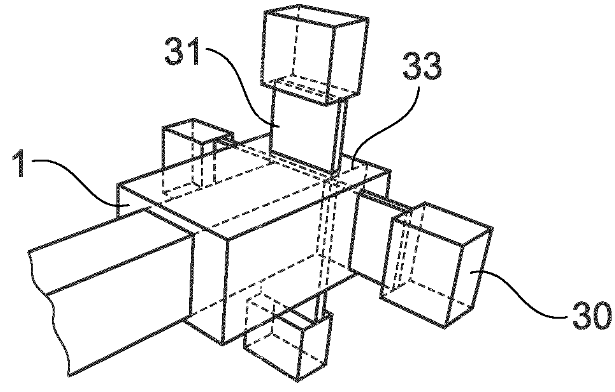


Fig. 3b

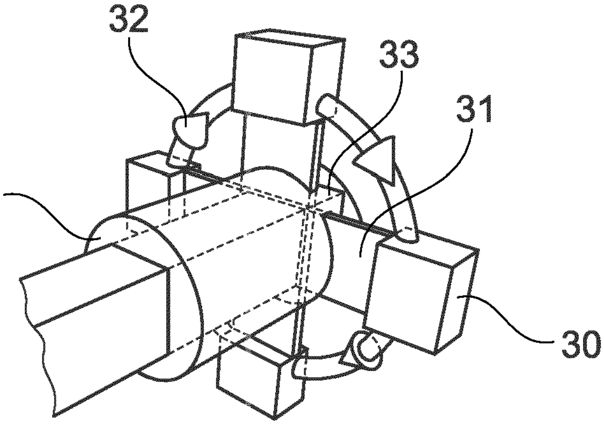


Fig. 3c

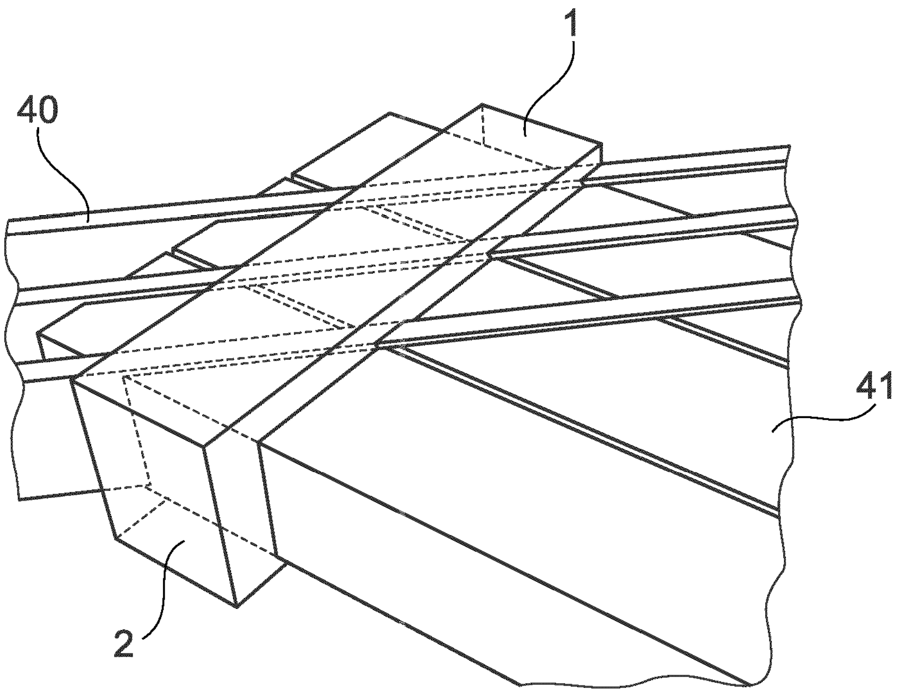


Fig. 4

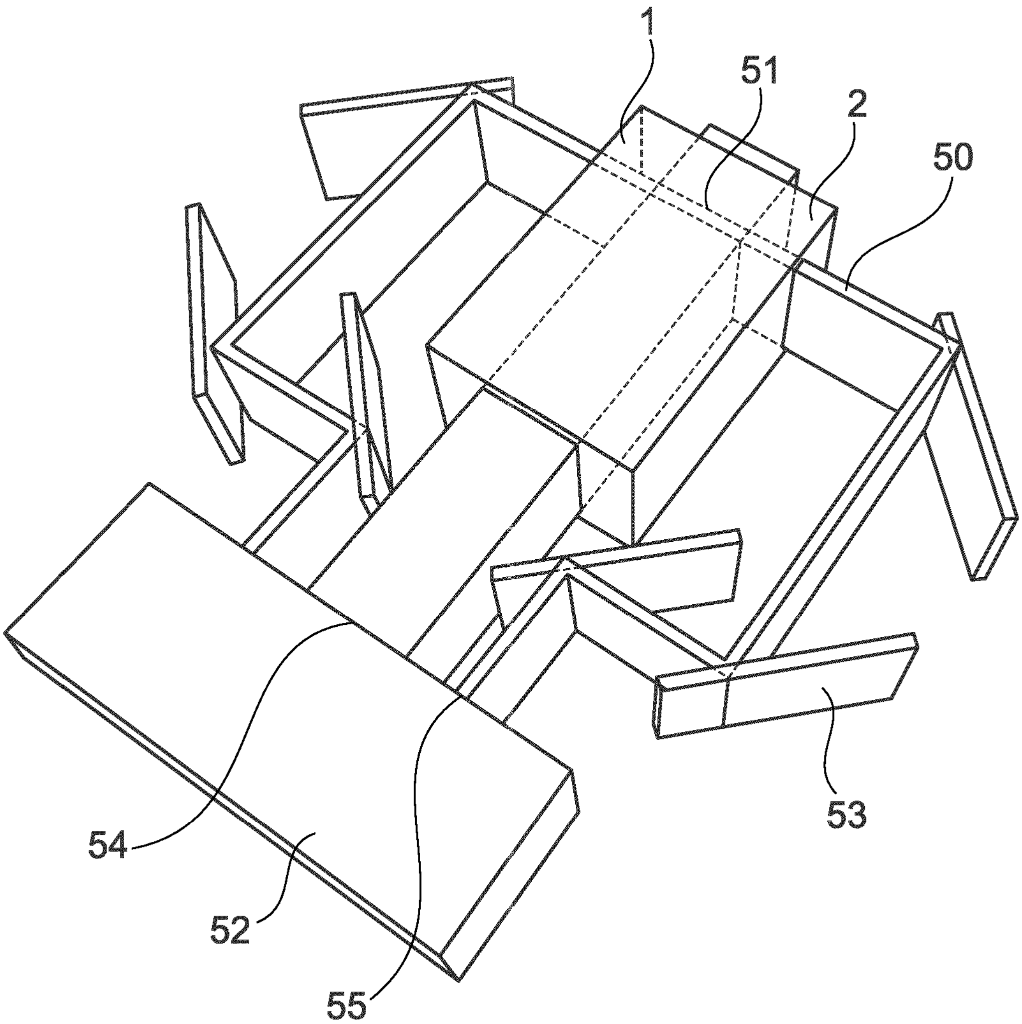


Fig. 5

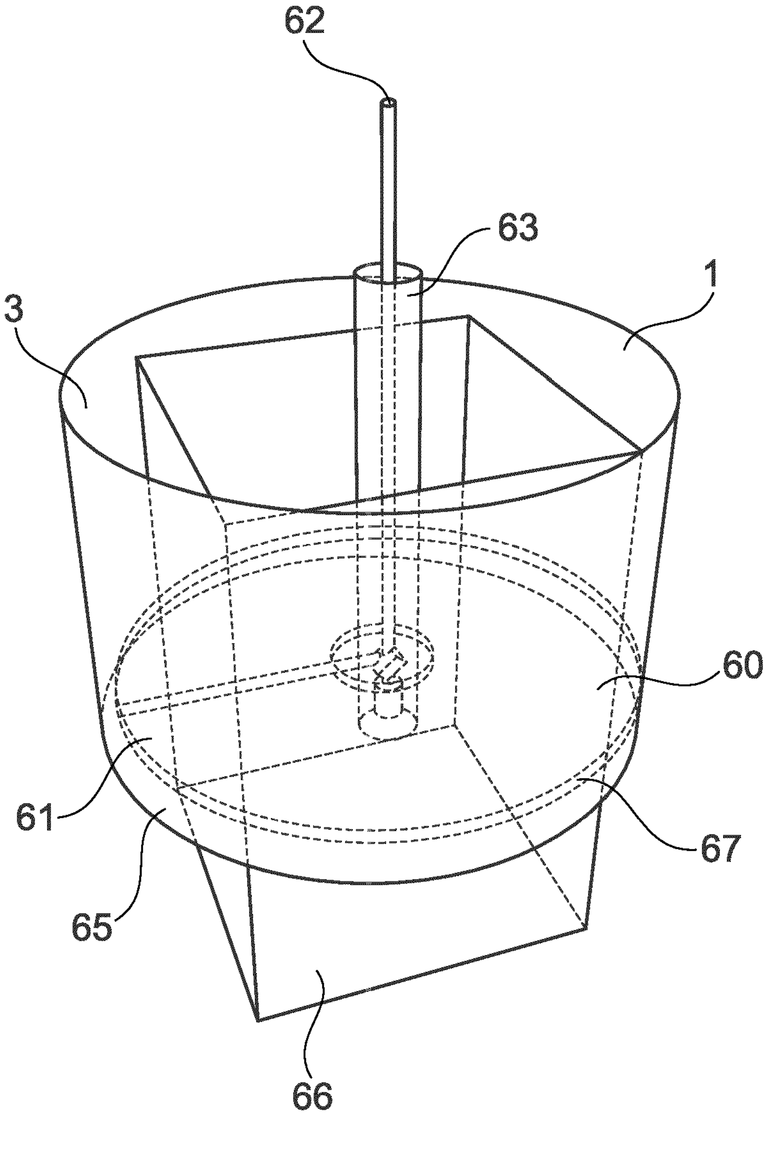


Fig. 6

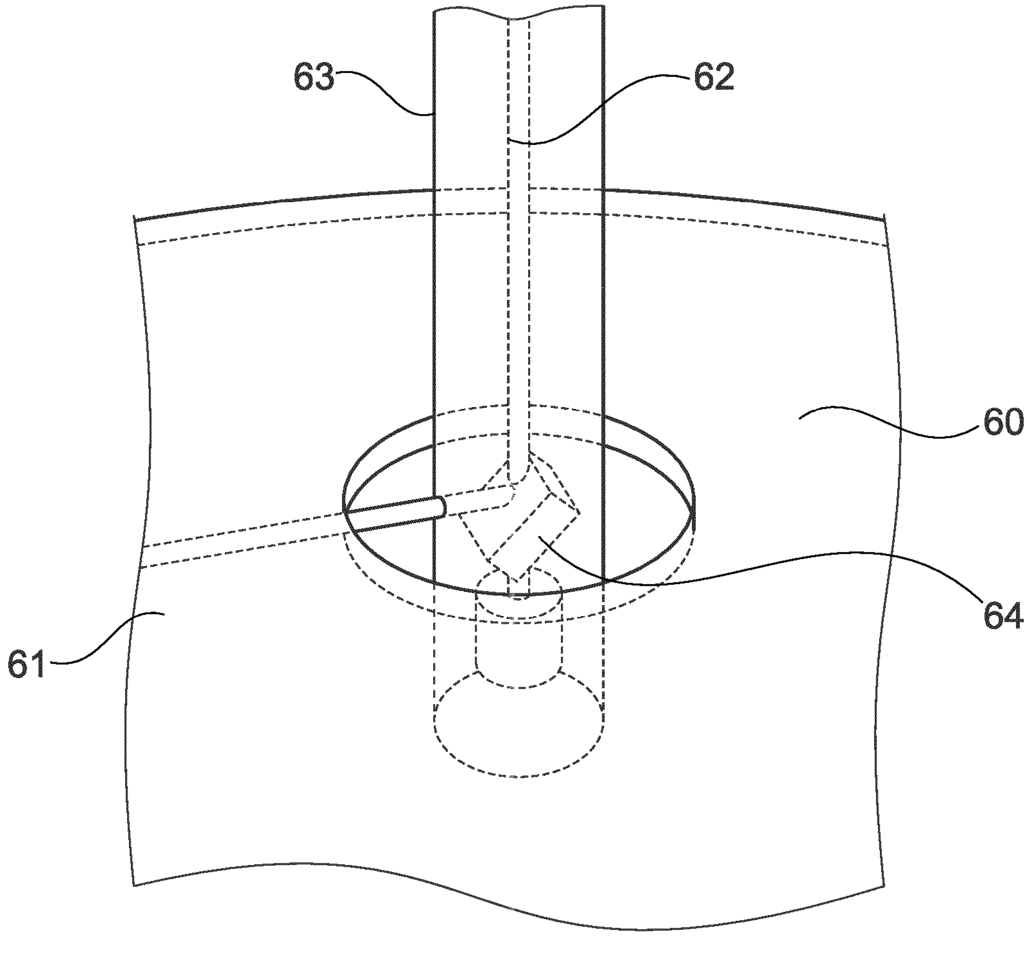


Fig. 7

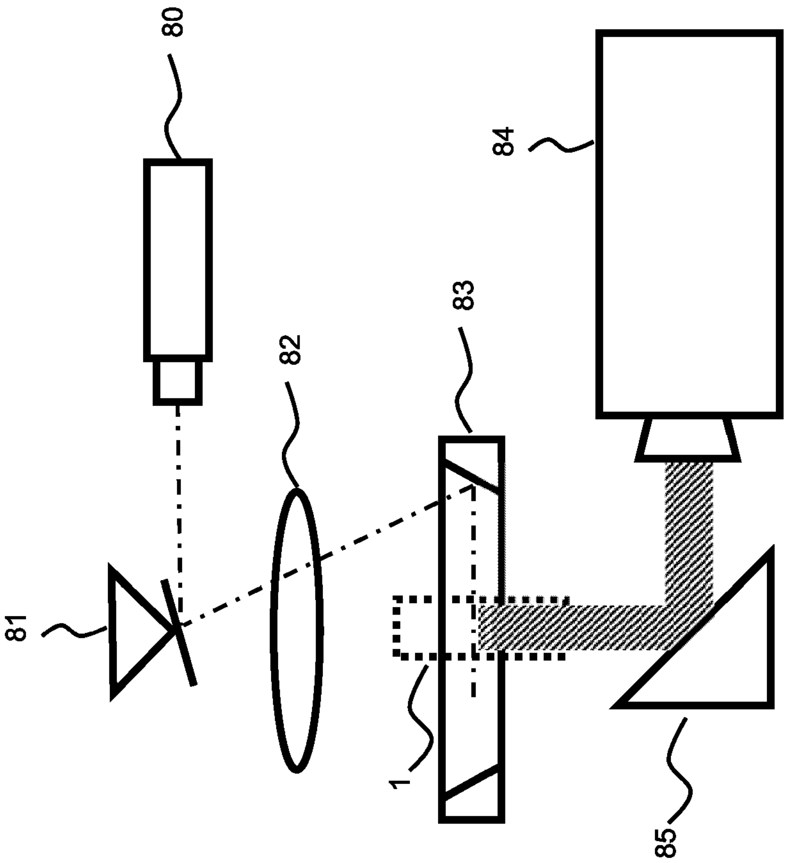


Fig. 8b

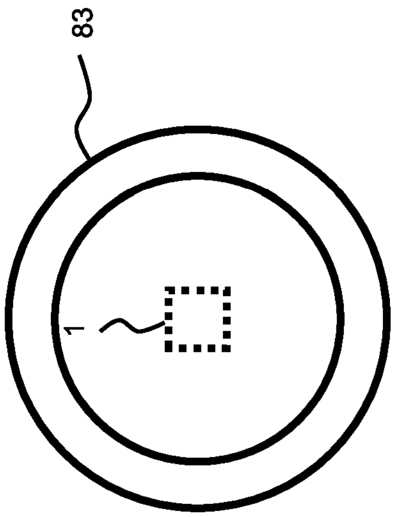


Fig. 8a

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2014108364 A1
- DE 102020108375 B3
- US 4041476 A
- WO 2020245456 A1
- WO 2021089090 A1


### In der Beschreibung aufgeführte Nicht-Patentliteratur


- *Nature Materials*, 2006, vol. 5, 365-369